# EUROPEAN PATENT APPLICATION

(11) **EP 4 560 393 A1**
(43) Date of publication of application: **28.05.2025**
(21) Application number: 23211099.9
(22) Date of filing: 21.11.2023
(51) Int. Cl.: G02F 1/35, G02F 1/365

(54) **RADIATION SOURCE**

(71) Applicant: ASML Netherlands B.V., 5500 AH Veldhoven (NL)
(72) Inventor: ABDOLVAND, Amir, 5500 AH Veldhoven (NL); LEKOSIOTIS, Athanasios, Edinburgh, EH14 4AS (GB); Travers, John, Colin, Edinburgh, EH14 4AS (GB); BELLI, Federico, Edinburgh, EH14 4AS (GB)
(74) Representative: ASML Netherlands B.V.

(57) **Abstract**

A broadband radiation source comprises: a hollow core optical fiber; a working medium; and a pump radiation source. The working medium is disposed within the hollow core and comprises a molecular gas. The pump radiation source is arranged to produce pump radiation that is received by, and propagates through, the hollow core from an input end to an output end. The pump radiation comprises a plurality of wavelength components, each having a bandwidth of 50 nm or less, and each having at least 10% of the total power of the pump radiation, the plurality of wavelength components at least partially spatially and/or temporally overlapping at an entrance of the optical fiber. A characteristic of the working medium and/or a configuration of the hollow core optical fiber are such that phase matching conditions for four wave mixing processes involving any two of the plurality of wavelength components are not met.

## Description

### FIELD

The present invention relates to a radiation source. The radiation source may be a supercontinuum source and may comprise an apparatus for receiving pump radiation and broadening a frequency range of the pump radiation so as to provide (broadband) output radiation. The present invention also relates to corresponding methods of generating broadband radiation. The radiation source may have application in the fields of lithography and/or metrology. The present invention also relates to a metrology apparatus comprising the radiation source. The present invention also relates to a lithography apparatus comprising the metrology apparatus.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-k₁ lithography may be used to process features with dimensions smaller than the classical resolution limit of a lithographic apparatus. In such process, the resolution formula may be expressed as CD = k₁×λ/NA, where λ is the wavelength of radiation employed, NA is the numerical aperture of the projection optics in the lithographic apparatus, CD is the "critical dimension" (generally the smallest feature size printed, but in this case half-pitch) and k₁ is an empirical resolution factor. In general, the smaller ki the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

In the field of lithography, many measurement systems may be used, both within a lithographic apparatus and external to a lithographic apparatus. Generally, such a measurements system may use a radiation source to irradiate a target with radiation, and a detection system operable to measure at least one property of a portion of the incident radiation that scatters from the target. An example of a measurement system that is external to a lithographic apparatus is an inspection apparatus or a metrology apparatus, which may be used to determine properties of a pattern previously projected onto a substrate by the lithographic apparatus. Such an external inspection apparatus may, for example, comprise a scatterometer. Examples of measurement systems that may be provided within a lithographic apparatus include: a topography measurement system (also known as a level sensor); a position measurement system (for example an interferometric device) for determining position of a reticle or wafer stage; and an alignment sensor for determining a position of an alignment mark. These measurement devices may use electromagnetic radiation to perform the measurement.

Different types of radiation may be used to interrogate different types of properties of a pattern. Some measurement systems may use radiation having a range of different wavelengths to perform one or more measurements. This may be enabled for example by providing a broadband radiation source, such as a supercontinuum radiation source. A supercontinuum radiation source may comprise an optical fiber having a non-linear medium through which a pulsed input radiation beam is propagated to broaden a spectrum of the radiation. The input radiation may often be referred to as pump radiation. The process of spectral broadening may rely on nonlinear effects.

It may be desirable to provide alternative apparatus and methods for generating (broadband) radiation that at least partially addresses one or more problems associated with the prior art whether identified herein or otherwise.

### SUMMARY

According to a first aspect of the present disclosure there is provided a radiation source comprising: a hollow core optical fiber comprising a body having a hollow core; a working medium disposed within the hollow core, the working medium comprising a molecular gas; and a pump radiation source arranged to produce pump radiation that is received by, and propagates through, the hollow core from an input end to an output end; wherein the pump radiation comprises a plurality of wavelength components, each having a bandwidth of 50 nm or less, the plurality of wavelength components at least partially spatially and/or temporally overlapping at an entrance of the optical fiber; wherein a power of each of the plurality of wavelength components is at least 10% of the total power of the pump radiation; and wherein a characteristic of the working medium and/or the configuration of the hollow core optical fiber are such that phase matching conditions for four wave mixing processes involving any two of the plurality of wavelength components are not met.

The plurality of wavelength components comprises at least a first wavelength component and a second wavelength component. The wavelength of the first wavelength component may be of the order of 515 nm. The wavelength of the second wavelength component may be of the order of 1030 nm.

The radiation source according to the first aspect of the present disclosure is advantageous, as now discussed.

The inventors have realized that in the specific case of a hollow core optical fiber and a working medium comprising a molecular gas there is significant advantage to providing a plurality of wavelength components having different wavelengths for spectral broadening. In particular, the inventors have found that with such an arrangement there can be a synergy between the plurality of wavelength components. In particular, the spectrum at the output end of the optical fiber is improved relative to the addition of the plurality of spectra that would result from using the individual wavelength components separately as pump radiation. This improvement may be an increase in the bandwidth and/or flatness of the output radiation.

Furthermore, since the characteristic (pressure, composition, temperature) of the working medium and/or the configuration (like a dimension of the hollow core) of the hollow core optical fiber are such that phase matching conditions for four wave mixing processes involving any two of the plurality of wavelength components are not met, the amount of energy from the pump radiation that is shifted to four wave mixing resonances is minimal. Advantageously, this allows for more of the pump energy to contribute to a broadband continuum output radiation, further enhancing the spectral broadening that is achieved.

Since the power of each of the plurality of wavelength components is at least 10% of the total power of the pump radiation, each of the plurality of wavelength components acts as a significant pump for the spectral broadening. This is rather than, for example, any of the plurality of wavelength components merely acting as seeds with minimal pumping energy.

It will be appreciated that in some embodiments the pump radiation may comprise pulsed radiation and each of the plurality of wavelength components may also comprise pulsed radiation. It will also be appreciated that for such embodiments, in order for the power of each of the plurality of wavelength components to be at least 10% of the total power of the pump radiation, a pulse energy of each of the plurality of wavelength components may be at least 10% of the total pulse energy of the pump radiation.

It will be appreciated that if the characteristics (pressure, composition) of the working medium and/or the configuration the hollow core fiber (like a dimension of the hollow core) are such that phase matching conditions for four wave mixing processes involving any two of the plurality of wavelength components are not met then there may not be any significant four wave mixing peaks in the spectrum of the output radiation. The characteristics of the working medium and the configuration of the hollow core fiber being such that phase matching conditions for four wave mixing processes involving any two of the plurality of wavelength components are not met may mean that a coherence length L_{c,FWM} of the four-wave mixing process is significantly less than the length L of the optical fibre. For example, the coherence length L_{c,FWM} of the four-wave mixing process may be less than L/10 (i.e. L_{c,FWM} < L/10).

The plurality of wavelength components may comprise a first wavelength component and a second wavelength component, the first component having a smaller wavelength than the second wavelength component; and wherein a zero dispersion wavelength of the optical fiber may be greater than the wavelength of the first wavelength component.

In some embodiments, the gain medium and the optical fiber may be configured so as to maximise a vibrational Raman gain within the hollow core.

Since the zero dispersion wavelength of the optical fiber is longer than the wavelength of the first wavelength component, the first wavelength component is under a normal dispersion regime. Furthermore, the working medium comprises a molecular gas. Therefore, the first wavelength component acts as a pump for stimulated Raman scattering (SRS). Under such a regime, the first wavelength is partially converted into a plurality of different discrete wavelengths via Stokes scattering and anti-Stokes scattering. This may generate a vibrational frequency comb with distinct equally-spaced peaks. With sufficient input energy of the first wavelength component and after a sufficient propagation length in the optical fiber these discrete wavelengths will undergo spectral broadening due to the rotational Raman and the Kerr effect. This causes these peaks to merge together to generate a substantially continuous spectrum of radiation. Such a process may be referred to as a comb-to-continuum process. The pump radiation source may operate with longer pulses (of the order of 100s of femtoseconds) than are typically required for more traditional supercontinuum generation such as self-phase modulation and soliton self-compression. Advantageously, the first wavelength component being under a normal dispersion regime allows for supercontinuum generation with such pulse lengths without using modulation instability. Although modulation instability enables access to supercontinuum formation with such longer pump pulses (than are typically required for more traditional supercontinuum generation such as self-phase modulation and soliton self-compression), such supercontinua formed via modulation instability typically exhibits high relative intensity noise and low temporal coherence, which may be undesirable.

In fact, SRS-based supercontinuum sources that are pumped with radiation in green input pump radiation (515-532 nm) have been demonstrated. However, such SRS-based supercontinuum sources typically require the use of moderately high pump pulse energy (for example ≥ 10 µJ). High pump pulse energies are not always available and they can limit the lifetime of the optical fiber at higher average powers. Such a pulse energy requirement also makes the pump radiation source (typically a laser system) costly. In addition, such a green-pumped SRS-based supercontinuum typically generates less infrared radiation than may be desired.

The inventors have realized that in the specific case of a hollow core optical fibers, a working medium comprising a molecular gas, and a pump radiation comprising at least one component (the first wavelength component) in a normal dispersion regime there is significant advantage to also providing at least one additional, higher wavelength component (the second wavelength component). In particular, the inventors have found that with such an arrangement there can be a synergy between the first and second wavelength components. In particular, the spectrum at the output end of the optical fiber is improved relative to the addition of the two spectra that would result from using the first wavelength component and the second wavelength component separately as pump radiation. This improvement may be an increase in the bandwidth and/or flatness of the output radiation.

Without wishing to be bound by any specific theory, it is thought that the presence of the first wavelength component may reduce a threshold for spectral broadening by the second wavelength component. Again, without wishing to be bound by any specific theory, it is thought that this may be due to the time scale over which the Raman modes excited by the first wavelength component being sufficiently long to aid the spectral broadening by the second wavelength component. In particular, it is thought that this effect is specific to, or at least enhanced in, arrangements using SRS-based supercontinuum using a working medium comprising a molecular gas.

It will be appreciated that the zero dispersion wavelength of the optical fiber may be selected or controlled by appropriate selection or control over the characteristics (pressure, composition) of the working medium and/or the configuration of the hollow core optical fiber, for example a dimension of the hollow core.

In some embodiments the pump radiation may comprise additional wavelength components having a larger wavelength than the first wavelength component, which at least partially spatially and/or temporally overlap with the first and second wavelength components at an entrance of the optical fiber. The presence of the first wavelength component may act to enhance spectral broadening of the second wavelength component and any such additional wavelength components.

In some embodiments, a power of each of the plurality of wavelength components may be at least 15% of the total power of the pump radiation. In some embodiments, a power of each of the plurality of wavelength components may be at least 20% of the total power of the pump radiation. In some embodiments, a power of each of the plurality of wavelength components may be at least 25% of the total power of the pump radiation. In some embodiments, a power of each of the plurality of wavelength components may be at least 30% of the total power of the pump radiation.

In some embodiments, a power of one of the plurality of wavelength components may be at least 50% of the total power of the pump radiation.

Since each of the plurality of wavelength components has a bandwidth of 50 nm or less, the plurality of wavelength components may each be considered to comprise monochromatic radiation. In some embodiments, each of the plurality of wavelength components has a bandwidth of 40 nm or less. In some embodiments, each of the plurality of wavelength components has a bandwidth of 30 nm or less. In some embodiments, each of the plurality of wavelength components has a bandwidth of 20 nm or less.

The zero dispersion wavelength of the optical fiber may be less than the wavelength of the second wavelength component.

If the pump radiation comprises a wavelength component having a wavelength that is greater than the zero dispersion wavelength of the optical fiber then this will be under an anomalous dispersion regime. In one example embodiment, the zero dispersion wavelength of the optical fiber is 800 nm, the wavelength of the first wavelength component is of the order of 515 nm and the wavelength of the second wavelength component is of the order of 1030 nm. Such an arrangement has been found to have better spectral broadening, particularly in the infrared region of the spectrum as compared to pumping with the first wavelength component alone. Initial numerical simulations suggests that the infrared part of this continuum is formed through the Raman-soliton supercontinuum process, and that the coherence and noise properties can be significantly enhanced with respect to modulational-instability based supercontinuum, while maintaining a flat and smooth spectrum and high spectral power density.

Additionally or alternatively, for embodiments wherein the pump radiation comprises a wavelength component that is under an anomalous dispersion regime may allows for spectral broadening of the second wavelength component via modulation instability (MI). Significant spectral broadening under such a regime also typically requires high pump pulse intensity and, in addition, the gas pressure used in the optical fiber is typically tightly controlled such that a zero dispersion point is close to the pump wavelength. However, it has been found that in the presence of the first wavelength component (in the normal dispersion regime), enhanced spectral broadening of the second wavelength component can be achieved.

Alternatively, in some other embodiments the zero dispersion wavelength of the optical fiber may be greater than the wavelength of the second wavelength component. With such an arrangement, the second wavelength component will be under a normal dispersion regime. This allows for spectral broadening of the second wavelength component via SRS. The presence of the first wavelength component is expected to also enhance spectral broadening of the second wavelength component via SRS.

The pump radiation source may comprise: a laser operable to generate a first beam of radiation with the wavelength of a second wavelength component of the plurality of wavelength components; and conversion optics arranged to convert a portion of the first beam of radiation into radiation with the wavelength of a first wavelength component of the plurality of wavelength components.

The laser may comprise an Ytterbium-based laser. The second wavelength may be of the order of 1030 nm.

The conversion optics may comprise: splitting optics arranged to receive the first radiation beam and to generate second and third radiation beams, the third radiation beam forming the second wavelength component; and a non-linear crystal arranged to receive the second radiation beam and to generate therefrom a fourth radiation beam having the wavelength of the first wavelength component, the fourth radiation beam forming the first wavelength component.

The splitting optics may comprise a beam splitter. As the second beam of radiation passes through the non-linear crystal, the fourth beam of radiation is generated. The non-linear crystal may comprise a lithium triborate (LBO) crystal. This may be via an even order non-linear optical process such as, for example, second harmonic generation (SHG). Such second harmonic generation at 515 nm may, for example, be performed in a 5 mm thick lithium triborate (LBO) crystal elevated to 50 °C.

Alternatively, the pump radiation source may comprise: a first laser operable to generate a first wavelength component of the plurality of wavelength components; and a second laser operable to generate a second wavelength component of the plurality of wavelength components.

The radiation source may further comprise combining optics arranged to receive the first wavelength component and the second wavelength component and to combine them so that the first and second radiation components at least partially spatio-temporally overlap.

The combining optics may comprise a beam splitter.

The radiation source may further comprise an adjustment module operable to provide control over spatial and/or temporal overlap of the first wavelength component and the second wavelength component.

For example, the adjustment module may be arranged so as to provide control over an optical path length of at least one of the first and second wavelength components, for example upstream of combining optics.

An inner dimension of the hollow core may be between 10 µm and 100 µm.

For example, an inner dimension of the hollow core optical fiber may be of the order of 20 µm to 50 µm. For example, an inner dimension of the hollow core optical fiber may be of the order of 30 µm.

In some embodiments, the hollow core optical fiber comprises an anti-resonance hollow core fiber. Such anti-resonance hollow core fiber can have resonances which can significantly affect the local dispersion profile of the fiber. In turn, this can affect phase-matching within the optical fiber.

Therefore, for such embodiments wherein the hollow core optical fiber comprises an anti-resonance hollow core fiber, the optical fiber may be arranged such that none of the resonances of the optical fiber coincide with, and are not close to, a wavelength that corresponds to a peak wavelength for four wave mixing processes involving any two of the plurality of wavelength components. It will be appreciated by the skilled person that the resonance(s) of such an anti-resonance hollow core fiber may be selected or controlled by suitable selection or control of a thickness of the walls of anti-resonance elements (for example capillaries) that surround the hollow core and serve to guide radiation through the hollow core.

The hollow core optical fiber may comprise a cladding portion surrounding the hollow core, the cladding portion comprising a plurality of anti-resonance elements for guiding radiation through the hollow core.

For such embodiments, the hollow core optical fiber comprises an anti-resonance hollow core fiber. Each of the plurality of anti-resonance elements may comprise a capillary.

The plurality of anti-resonance elements of the cladding portion may be disposed in a ring structure around the hollow core.

For example, in one embodiment the cladding portion may comprise a single ring of 6 anti-resonance elements (capillaries) surrounding the hollow core. It will be appreciated that other topologies could be used in other embodiments.

The plurality of anti-resonance elements may be arranged so that each of the anti-resonance elements is not in contact with any of the other anti-resonance elements.

In general, the pump radiation may be pulsed. In general, the parameters of the radiation source may be selected as follows.

A pulse duration, a pulse energy, and optical fiber hollow core dimension and length may be selected to ensure that sufficient nonlinear effects are stimulated so as to obtain spectral broadening. This may involve selecting the pulse duration, pulse energy and hollow core dimension to ensure a sufficient peak spatial power density in the optical fiber to ensure sufficient nonlinear effects are stimulated. In addition, the length of the optical fiber may be selected so as to ensure these nonlinear effects generate a desired level of spectral broadening by the end of the optical fiber. In some embodiments, a peak intensity of the pump radiation at the input end of the optical fibre may be between 10¹² and 2×10¹³ W/cm².

The parameters of the radiation source may be scalable.

The pump radiation may be pulsed and may have a repetition rate of 1 MHz or above.

In other embodiments, the repetition rate may be lower, for example 1 kHz or above.

The pump radiation may be pulsed and may have a pulse duration between 50 fs and 10 ps.

In some embodiments, the pump radiation may have a pulse duration of the order of 100 fs.

The pump radiation may be pulsed and each pulse may have a pulse energy of between 1 µJ and 100 µJ.

For example, each pulse may have a pulse energy of between 1 µJ and 10 µJ.

In one example embodiment, a first wavelength component of each pulse has an energy of 4 µJ and a second wavelength component of each pulse has an energy of 2 µJ. In another example embodiment, a first wavelength component of each pulse has an energy of 10 µJ and a second wavelength component of each pulse has an energy of 2 µJ.

The optical fiber may have a length of between 10 cm and 10 m.

For example, the optical fiber may have a length of between 0.5 m and 1.5 m. For example, the optical fiber may have a length of around 1 m.

It will be appreciated that the working medium may comprise other components in addition to the molecular gas. In some embodiments, the molecular gas may be a dominant component of the working medium. In general, there may be a sufficient quantity of the molecular gas to drive the broadening dynamics. The working medium may comprise between 10% and 100% molecular gas, as judged by partial pressure.

The molecular gas may comprise hydrogen or deuterium.

Additionally or alternatively, the molecular gas may comprise one or more of N₂, O₂, N₂O, CH₄ and SF₆.

The working medium may be under a pressure of the order between 1 bar and 200 bar.

In general, the working medium may be under sufficient pressure enough to achieve (a) normal dispersion for a first wavelength component of the plurality of wavelength components and (b) sufficient spectral broadening. It will be appreciated that the specific pressure used may vary depending on the core size of the optical fiber and the gas species. In some embodiments with a core size of the order of 30 µm and a working medium comprising deuterium, an optimal pressure range may be between 30-50 bar. For example, in some embodiments the working medium may be under a pressure of the order of 40 bar.

The pump radiation source may be arranged such that the plurality of wavelength components are polarized.

For example, a first wavelength component and a second wavelength component may be linearly polarized. Alternatively, a first wavelength component and a second wavelength component may be circularly polarized.

According to a second aspect of the present disclosure there is provided a metrology arrangement for determining a parameter of interest of a structure on a substrate, the metrology arrangement comprising: a radiation source according to the first aspect of the present disclosure; an illumination sub-system for illuminating the structure on the substrate using the broadband output radiation; and a detection sub-system for detecting a portion of radiation scattered and/or reflected by the structure, and for determining the parameter of interest from said portion of radiation.

According to a third aspect of the present disclosure there is provided a lithographic apparatus comprising the metrology arrangement according the second aspect of the present disclosure.

According to a fourth aspect of the present disclosure there is provided a method for broadband radiation generation, the method comprising: directing pump radiation through a hollow core optical fiber with working medium comprising a molecular gas disposed within the hollow core; wherein the pump radiation comprises a plurality of wavelength components, each having a bandwidth of 50 nm or less, the plurality of wavelength components at least partially spatially and/or temporally overlapping at an entrance of the optical fiber; wherein a power of each of the plurality of wavelength components is at least 10% of the total power of the pump radiation; and wherein a characteristic of the working medium and/or a configuration of the hollow core optical fiber are such that phase matching conditions for four wave mixing processes involving any two of the plurality of wavelength components are not met.

The method according to the fourth aspect of the present disclosure may be carried out using the radiation source according to the first aspect of the present disclosure. The method according to the fourth aspect of the present disclosure may comprise features corresponding to any combination of the features of the radiation source according to the first aspect of the present disclosure as desired.

As explained above, the inventors have found that with such an arrangement there can be a synergy between the plurality of wavelength components. In particular, the spectrum at the output end of the optical fiber is improved relative to the addition of the plurality of spectra that would result from using each of the individual wavelength components separately as pump radiation. This improvement may be an increase in the bandwidth and/or flatness of the output radiation. Furthermore, since the characteristic (pressure) of the working medium and the configuration of the hollow core optical fiber (like a dimension of the hollow core) are such that phase matching conditions for four wave mixing processes involving any two of the plurality of wavelength components are not met, the amount of energy from the pump radiation that is shifted to four wave mixing resonances is minimal. Advantageously, this allows for more of the pump energy to contribute to a broadband continuum output radiation, further enhancing the spectral broadening that is achieved.

The plurality of wavelength components may comprise a first wavelength component and a second wavelength component, the first component having a smaller wavelength than the second wavelength component; and a zero dispersion wavelength of the optical fiber may be greater than the wavelength of the first wavelength component.

In some embodiments, the gain medium and the optical fiber may be configured so as to maximise a vibrational Raman gain within the hollow core.

Since the zero dispersion wavelength of the optical fiber is longer than the wavelength of the first wavelength component, the first wavelength component is under a normal dispersion regime and the first wavelength component can act as a pump for stimulated Raman scattering (SRS). As discussed above, this can be pumped using longer pulses than are typically required for more traditional supercontinuum generation such as self-phase modulation and soliton self-compression and can generate supercontinua exhibiting less relative intensity noise and higher temporal coherence than those formed via modulation instability.

It will be appreciated that the zero dispersion wavelength of the optical fiber may be selected or controlled by appropriate selection or control over the pressure of the working medium and the dimension of the hollow core.

In some embodiments, a power of each of the plurality of wavelength components may be at least 15% of the total power of the pump radiation. In some embodiments, a power of each of the plurality of wavelength components may be at least 20% of the total power of the pump radiation. In some embodiments, a power of each of the plurality of wavelength components may be at least 25% of the total power of the pump radiation. In some embodiments, a power of each of the plurality of wavelength components may be at least 30% of the total power of the pump radiation.

In some embodiments, a power of one of the plurality of wavelength components may be at least 50% of the total power of the pump radiation.

Since each of the plurality of wavelength components has a bandwidth of 50 nm or less, the plurality of wavelength components may each be considered to comprise monochromatic radiation. In some embodiments, each of the plurality of wavelength components has a bandwidth of 40 nm or less. In some embodiments, each of the plurality of wavelength components has a bandwidth of 30 nm or less. In some embodiments, each of the plurality of wavelength components has a bandwidth of 20 nm or less.

The zero dispersion wavelength of the optical fiber may be less than the wavelength of the second wavelength component.

If the pump radiation comprises a wavelength component having a wavelength that is greater than the zero dispersion wavelength of the optical fiber then this will be under an anomalous dispersion regime. In one example embodiment, the zero dispersion wavelength of the optical fiber is 800 nm, the wavelength of the first wavelength component is of the order of 515 nm and the wavelength of the second wavelength component is of the order of 1030 nm. Such an arrangement has been found to have better spectral broadening, particularly in the infrared region of the spectrum as compared to pumping with the first wavelength component alone. Initial numerical simulations suggests that the infrared part of this continuum is formed through the Raman-soliton supercontinuum process, and that the coherence and noise properties can be significantly enhanced with respect to modulational-instability based supercontinuum, while maintaining a flat and smooth spectrum and high spectral power density.

Additionally or alternatively, for embodiments wherein the pump radiation comprises a wavelength component that is under an anomalous dispersion regime may allow for spectral broadening of the second wavelength component via modulation instability (MI). Significant spectral broadening under such a regime also typically requires high pump pulse intensity and, in addition, the gas pressure used in the optical fiber is typically tightly controlled such that a zero dispersion point is close to the pump wavelength. However, it has been found that in the presence of the first wavelength component (in the normal dispersion regime), enhanced spectral broadening of the second wavelength component can be achieved.

The method may further comprise generating the pump radiation.

Generating the pump radiation may comprise: generating a first beam of radiation with the wavelength of a second wavelength component of the plurality of wavelength components; and converting a portion of the first beam of radiation into radiation with the wavelength of a first wavelength component of the plurality of wavelength components.

Converting a portion of the first beam of radiation into radiation with the wavelength of the first wavelength component may be achieved using second harmonic generation.

This may use a non-linear crystal, for example a lithium triborate (LBO) crystal.

The method may further comprise controlling a spatial and/or temporal overlap of the plurality of wavelength components.

An inner dimension of the hollow core may be between 10 µm and 100 µm.

For example, an inner dimension of the hollow core optical fiber may be of the order of 20 µm to 50 µm. For example, an inner dimension of the hollow core optical fiber may be of the order of 30 µm.

In some embodiments, the hollow core optical fiber comprises an anti-resonance hollow core fiber. Such anti-resonance hollow core fiber can have resonances which can significantly affect the local dispersion profile of the fiber. In turn, this can affect phase-matching within the optical fiber.

Therefore, for such embodiments wherein the hollow core optical fiber comprises an anti-resonance hollow core fiber, the optical fiber may be arranged such that none of the resonances of the optical fiber coincide with, and are not close to, a wavelength that corresponds to a peak wavelength for four wave mixing processes involving any two of the plurality of wavelength components. It will be appreciated by the skilled person that the resonance(s) of such an anti-resonance hollow core fiber may be selected or controlled by suitable selection or control of a thickness of the walls of anti-resonance elements (for example capillaries) that surround the hollow core and serve to guide radiation through the hollow core.

In general, the pump radiation may be pulsed. In general, the parameters of the radiation source may be selected as follows.

A pulse duration, a pulse energy, and optical fiber hollow core dimension and length may be selected to ensure that sufficient nonlinear effects are stimulated so as to obtain spectral broadening. This may involve selecting the pulse duration, pulse energy and hollow core dimension to ensure a sufficient peak spatial power density in the optical fiber to ensure sufficient nonlinear effects are stimulated. In addition, the length of the optical fiber may be selected so as to ensure these nonlinear effects generate a desired level of spectral broadening by the end of the optical fiber. In some embodiments, a peak intensity of the pump radiation at the input end of the optical fibre may be between 10¹² and 2×10¹³ W/cm².

The parameters of the radiation source may be scalable.

The pump radiation may be pulsed and may have a repetition rate of 1 MHz or above.

The pump radiation may be pulsed and may have a pulse duration between 50 fs and 10 ps.

The pump radiation may be pulsed and each pulse may have a pulse energy of between 1 µJ and 100 µJ.

For example, each pulse may have a pulse energy of between 1 µJ and 10 µJ.

In one example embodiment, a first wavelength component of each pulse has an energy of 4 µJ and a second wavelength component of each pulse has an energy of 2 µJ. In another example embodiment, a first wavelength component of each pulse has an energy of 8 µJ and a second wavelength component of each pulse has an energy of 2 µJ.

The optical fiber may have a length of between 10 cm and 10 m.

For example, the optical fiber may have a length of between 0.5 m and 1.5 m. For example, the optical fiber may have a length of around 1 m.

It will be appreciated that the working medium may comprise other components in addition to the molecular gas. In some embodiments, the molecular gas may be a dominant component of the working medium.

The molecular gas may comprise hydrogen or deuterium.

Additionally or alternatively, the molecular gas may comprise one or more of N₂, O₂, N₂O, CH₄ and SF₆.

The working medium may be under a pressure of the order of between 1 bar and 200 bar.

The method may further comprise polarizing the plurality of wavelength components.

For example, the first wavelength component and the second wavelength component may be linearly polarized. Alternatively, the first wavelength component and the second wavelength component may be circularly polarized.

### BRIEF DESCRIPTION OF THE DRAWINGS

Embodiments of the invention will now be described, by way of example only, with reference to the accompanying schematic drawings, in which:
- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometer metrology tool;
- Figure 5 depicts a schematic overview of a level sensor metrology tool;
- Figure 6 depicts a schematic overview of an alignment sensor metrology tool;
- Figure 7 is a schematic cross sectional view of a hollow core optical fiber that may form part of a radiation source according to an embodiment in a transverse plane (i.e. perpendicular to an axis of the optical fiber);
- Figure 8A depicts a schematic representation of a first embodiment of a radiation source for providing broadband output radiation that comprises the hollow core optical fiber shown in Figure 7;
- Figure 8B depicts a schematic representation of a second embodiment of a radiation source for providing broadband output radiation that comprises the hollow core optical fiber shown in Figure 7;
- Figure 9 schematically depicts an example embodiment a pump radiation source 136 that it is operable to generate pump radiation comprising two wavelength components and which may form part of the new radiation source shown in Figures 8A and 8B;
- Figure 10A shows, for a case where the input pump radiation comprises radiation having a wavelength of 515 nm only, a two-dimensional plot of the spectral energy density achieved at the output end of a hollow core optical fiber as a function of the pulse energy of the input pump radiation;
- Figure 10B shows, for a case where the input pump radiation comprises radiation having a wavelength of 1030 nm only, a two-dimensional plot of the spectral energy density achieved at the output end of a hollow core optical fiber as a function of the pulse energy of the input pump radiation;
- Figure 10C shows, for a case where input pump radiation comprises radiation having both a first wavelength component with a wavelength of 515 nm and a second wavelength component with a wavelength of 1030 nm, a two-dimensional plot of the spectral energy density achieved at the output end of a hollow core optical fiber as a function of the pulse energy of the first wavelength component (the pulse energy of the 1030 nm component is fixed at 2 µJ);

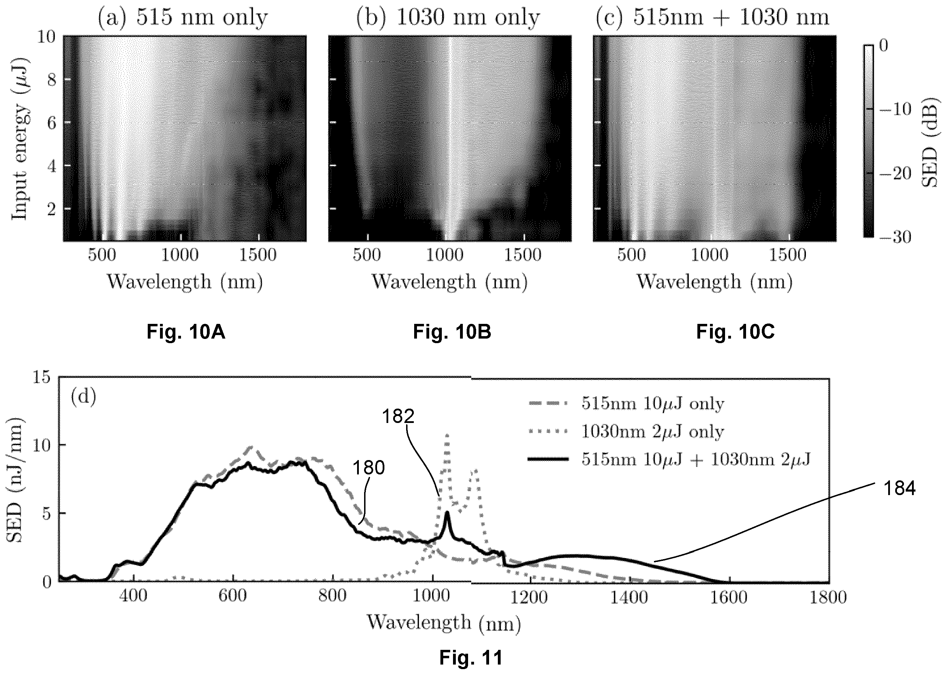

- Figure 11 shows three one-dimensional plots of the spectral energy density achieved at the output end of a hollow core optical fiber, each corresponding to one of the three cases shown in Figures 10A to 10C respectively but for a single input pulse energy; the first one-dimensional plot is the spectral energy density achieved at the output end of the optical fiber when pumping with the 515 nm component only with a pulse energy of 10 µJ; the second one-dimensional plot is the spectral energy density achieved at the output end of the optical fiber when pumping with the 1030 nm component only with a pulse energy of 2 µJ; and the third one-dimensional plot is the spectral energy density achieved at the output end of the optical fiber when pumping with the 515 nm component with a pulse energy of 10 µJ and an additional 1030 nm component with a pulse energy of 2 µJ;
- Figure 12 shows both: (a) the same spectral energy density plot shown in Figure 11 achieved when pumping with the 515 nm component only with a pulse energy of 10 µJ; and another spectral energy density plot achieved at the output end of the optical fiber when pumping with a 515 nm component with a pulse energy of 4 µJ and an additional 1030 nm component with a pulse energy of 2 µJ; and
- Figure 13 is a schematic illustration of a method for broadband radiation generation according to an embodiment of the present disclosure.

### DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

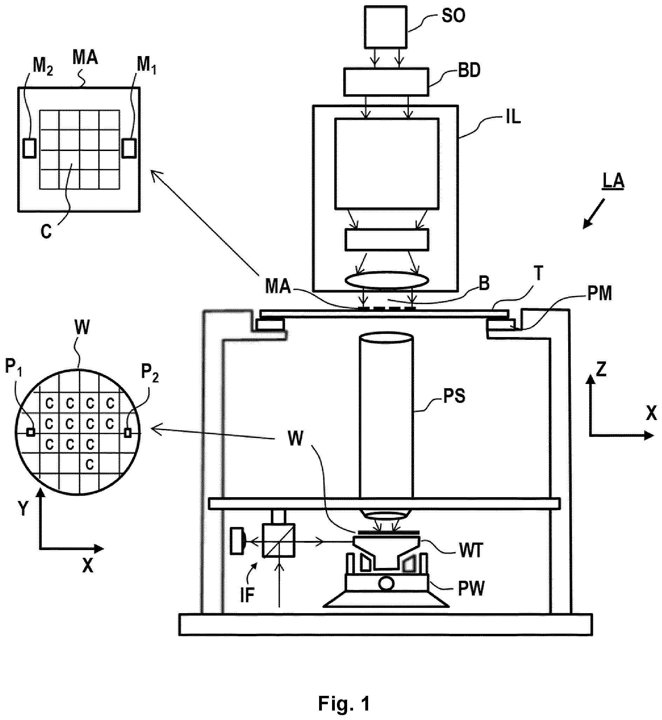

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) T constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support T, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

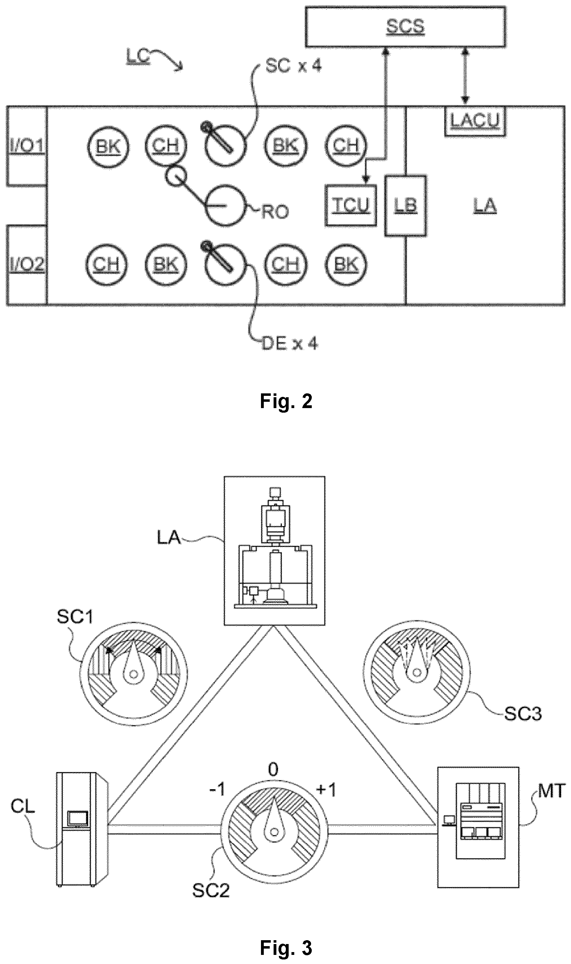

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Figure 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Figure 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Figure 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Figure 3 by the multiple arrows in the third scale SC3). Different types of metrology tools MT for measuring one or more properties relating to a lithographic apparatus and/or a substrate to be patterned will now be described.

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is a ellipsometric scatterometer. The ellipsometric scatterometer allows for determining parameters of a lithographic process by measuring scattered radiation for each polarization state. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

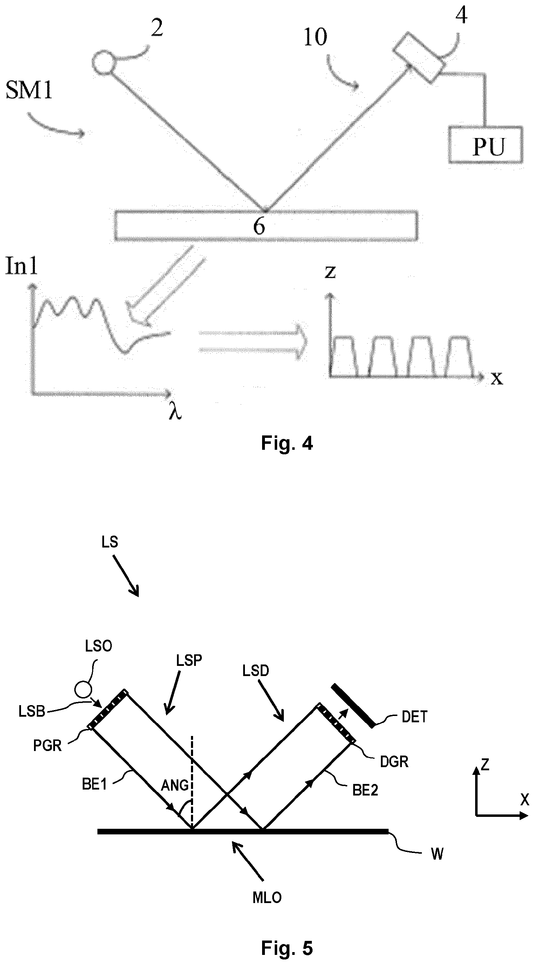

A metrology apparatus, such as a scatterometer SM1, is depicted in figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity In1 as a function of wavelength λ) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 4. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

In lithographic processes, it is desirable to make frequently measurements of the structures created, e.g., for process control and verification. Various tools for making such measurements are known, including scanning electron microscopes or various forms of metrology apparatuses, such as scatterometers. Examples of known scatterometers often rely on provision of dedicated metrology targets, such as underfilled targets (a target, in the form of a simple grating or overlapping gratings in different layers, that is large enough that a measurement beam generates a spot that is smaller than the grating) or overfilled targets (whereby the illumination spot partially or completely contains the target). Further, the use of metrology tools, for example an angular resolved scatterometter illuminating an underfilled target, such as a grating, allows the use of so-called reconstruction methods where the properties of the grating can be calculated by simulating interaction of scattered radiation with a mathematical model of the target structure and comparing the simulation results with those of a measurement. Parameters of the model are adjusted until the simulated interaction produces a diffraction pattern similar to that observed from the real target.

Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers can measure in one image multiple targets from from multiple gratings using light from soft x-ray and visible to near-IR wave range.

A topography measurement system, level sensor or height sensor, and which may be integrated in the lithographic apparatus, is arranged to measure a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband radiation source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

The position measurement system PMS may comprise any type of sensor that is suitable to determine a position of the substrate support WT. The position measurement system PMS may comprise any type of sensor that is suitable to determine a position of the mask support MT. The sensor may be an optical sensor such as an interferometer or an encoder. The position measurement system PMS may comprise a combined system of an interferometer and an encoder. The sensor may be another type of sensor, such as a magnetic sensor. a capacitive sensor or an inductive sensor. The position measurement system PMS may determine the position relative to a reference, for example the metrology frame MF or the projection system PS. The position measurement system PMS may determine the position of the substrate table WT and/or the mask support MT by measuring the position or by measuring a time derivative of the position, such as velocity or acceleration.

The position measurement system PMS may comprise an encoder system. An encoder system is known from for example, United States patent application US2007/0058173A1, filed on September 7, 2006, hereby incorporated by reference. The encoder system comprises an encoder head, a grating and a sensor. The encoder system may receive a primary radiation beam and a secondary radiation beam. Both the primary radiation beam as well as the secondary radiation beam originate from the same radiation beam, i.e., the original radiation beam. At least one of the primary radiation beam and the secondary radiation beam is created by diffracting the original radiation beam with the grating. If both the primary radiation beam and the secondary radiation beam are created by diffracting the original radiation beam with the grating, the primary radiation beam needs to have a different diffraction order than the secondary radiation beam. Different diffraction orders are, for example,+1^{st} order, -1^{st} order, +2^{nd} order and -2^{nd} order. The encoder system optically combines the primary radiation beam and the secondary radiation beam into a combined radiation beam. A sensor in the encoder head determines a phase or phase difference of the combined radiation beam. The sensor generates a signal based on the phase or phase difference. The signal is representative of a position of the encoder head relative to the grating. One of the encoder head and the grating may be arranged on the substrate structure WT. The other of the encoder head and the grating may be arranged on the metrology frame MF or the base frame BF. For example, a plurality of encoder heads are arranged on the metrology frame MF, whereas a grating is arranged on a top surface of the substrate support WT. In another example, a grating is arranged on a bottom surface of the substrate support WT, and an encoder head is arranged below the substrate support WT.

The position measurement system PMS may comprise an interferometer system. An interferometer system is known from, for example, United States patent US6,020,964, filed on July 13, 1998, hereby incorporated by reference. The interferometer system may comprise a beam splitter, a mirror, a reference mirror and a sensor. A beam of radiation is split by the beam splitter into a reference beam and a measurement beam. The measurement beam propagates to the mirror and is reflected by the mirror back to the beam splitter. The reference beam propagates to the reference mirror and is reflected by the reference mirror back to the beam splitter. At the beam splitter, the measurement beam and the reference beam are combined into a combined radiation beam. The combined radiation beam is incident on the sensor. The sensor determines a phase or a frequency of the combined radiation beam. The sensor generates a signal based on the phase or the frequency. The signal is representative of a displacement of the mirror. In an embodiment, the mirror is connected to the substrate support WT. The reference mirror may be connected to the metrology frame MF. In an embodiment, the measurement beam and the reference beam are combined into a combined radiation beam by an additional optical component instead of the beam splitter.

In the manufacture of complex devices, typically many lithographic patterning steps are performed, thereby forming functional features in successive layers on the substrate. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks. Each mark is a structure whose position can be measured at a later time using a position sensor, typically an optical position sensor. The position sensor may be referred to as "alignment sensor" and marks may be referred to as "alignment marks". A mark may also be referred to as a metrology target.

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

A mark, or alignment mark, may comprise a series of bars formed on or in a layer provided on the substrate or formed (directly) in the substrate. The bars may be regularly spaced and act as grating lines so that the mark can be regarded as a diffraction grating with a well-known spatial period (pitch). Depending on the orientation of these grating lines, a mark may be designed to allow measurement of a position along the X axis, or along the Y axis (which is oriented substantially perpendicular to the X axis). A mark comprising bars that are arranged at +45 degrees and/or -45 degrees with respect to both the X- and Y-axes allows for a combined X- and Y- measurement using techniques as described in US2009/195768A, which is incorporated by reference.

The alignment sensor scans each mark optically with a spot of radiation to obtain a periodically varying signal, such as a sine wave. The phase of this signal is analyzed, to determine the position of the mark and, hence, of the substrate relative to the alignment sensor, which, in turn, is fixated relative to a reference frame of a lithographic apparatus. So-called coarse and fine marks may be provided, related to different (coarse and fine) mark dimensions, so that the alignment sensor can distinguish between different cycles of the periodic signal, as well as the exact position (phase) within a cycle. Marks of different pitches may also be used for this purpose.

Measuring the position of the marks may also provide information on a deformation of the substrate on which the marks are provided, for example in the form of a wafer grid. Deformation of the substrate may occur by, for example, electrostatic clamping of the substrate to the substrate table and/or heating of the substrate when the substrate is exposed to radiation.

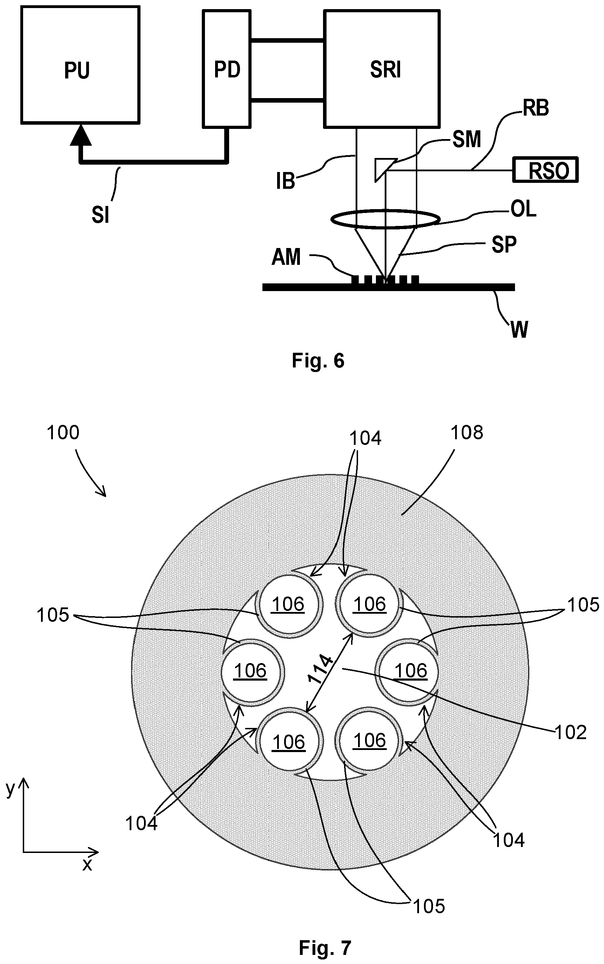

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and de-multiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source may be a supercontinuum source.

High quality broadband radiation, for example supercontinuum radiation, may be difficult to generate. One method for generating broadband radiation may be to broaden high-power narrow band or single frequency input radiation, for example making use of non-linear, higher order effects. The input radiation (which may be produced using a laser) may be referred to as pump radiation. Alternatively, the input radiation may be referred to as seed radiation. To obtain high power radiation for broadening effects, radiation may be confined into a small area so that strongly localised high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

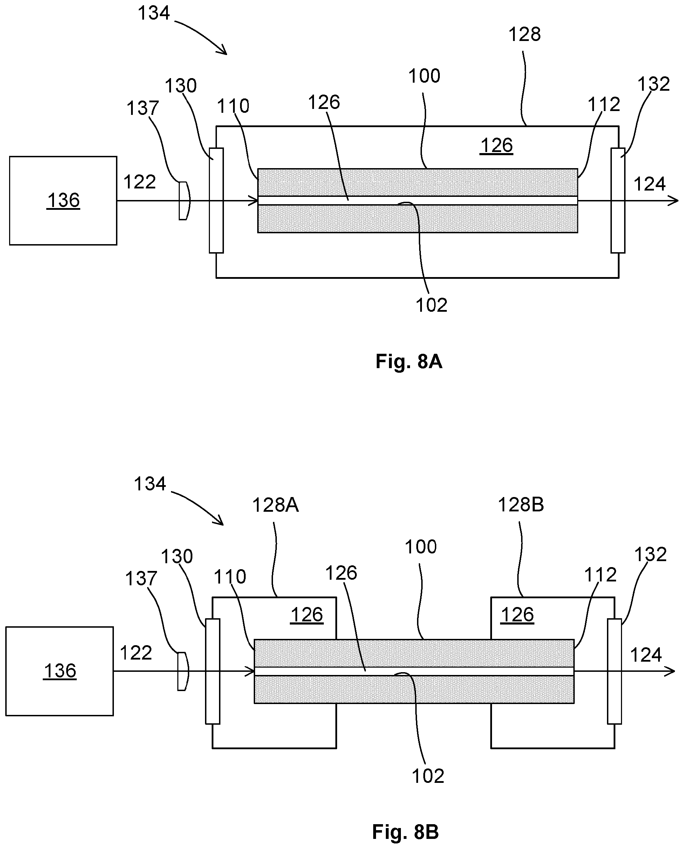

In some implementations, as discussed further below with reference to Figures 8A and 8B, methods and apparatus for broadening input radiation may use a fiber for confining input radiation, and for broadening the input radiation to output broadband radiation. The fiber may be a hollow core fiber, and may comprise internal structures to achieve effective guiding and confinement of radiation in the fiber. The fiber may be a hollow core photonic crystal fiber (HC-PCF), which is particularly suitable for strong radiation confinement, predominantly inside the hollow core of the fiber, achieving high radiation intensities. In particular, the optical fiber may be a hollow-core, photonic crystal fiber of a type comprising anti-resonant structures for confinement of radiation. Such fibers comprising anti-resonant structures are known in the art as anti-resonant fibers, tubular fibers, single-ring fibers, negative curvature fibers or inhibited coupling fibers. Various different designs of such fibers are known in the art. Alternatively, the optical fiber may be photonic bandgap fibers (for example a Kagome fiber).

The hollow core of the fiber may be filled with a gas acting as a broadening medium for broadening input radiation. Such a fiber and gas arrangement may be used to create a supercontinuum radiation source. Radiation input to the fiber may be electromagnetic radiation, for example radiation in one or more of the infrared, visible, UV, and extreme UV spectra. The output radiation may consist of or comprise broadband radiation, which may be referred to herein as white light.

Some known broadband radiation sources use arrangements which produce spectral broadening of pulsed pump radiation but wherein parameters of the pulsed pump radiation, the optical fiber and the working medium are configured to allow modulational instability to produce the spectral broadening. This is achieved by operating in an anomalous dispersion regime. There are a number of reasons why modulational instability is often used to produce the spectral broadening in known arrangements.

An example of an optical fiber for use in the radiation source is now described with reference to Figure 7, which is a schematic cross sectional view of the optical fiber 100 in a transverse plane.

The optical fiber 100 comprises an elongate body, which is longer in one dimension compared to the other two dimensions of the fiber 100. This longer dimension may be referred to as an axial direction and may define an axis of the optical fiber 100. The two other dimensions define a plane which may be referred to as a transverse plane. Figure 7 shows a cross-section of the optical fiber 100 in this transverse plane (i.e. perpendicular to the axis), which is labelled as the x-y plane. The transverse cross-section of the optical fiber 100 may be substantially constant along the fiber axis.

It will be appreciated that the optical fiber 100 has some degree of flexibility and therefore the direction of the axis will not, in general, be uniform along the length of the optical fiber 100. The terms such as the optical axis, the transverse cross-section and the like will be understood to mean the local optical axis, the local transverse cross-section and so on. Furthermore, where components are described as being cylindrical or tubular these terms will be understood to encompass such shapes that may have been distorted as the optical fiber 100 is flexed.

The optical fiber 100 may have any length and it will be appreciated that the length of the optical fiber 100 may be dependent on the application. The optical fiber 100 may have a length between 10 cm and 10 m, for example, the optical fiber 100 may have a length between 0.5 m and 1.5 m.

The optical fiber 100 comprises: a hollow core 102; a cladding portion surrounding the hollow core 102; and a support portion 108 surrounding and supporting the cladding portion. The optical fiber 100 may be considered to comprise a body (comprising the cladding portion and the support portion 108) having a hollow core 102. The cladding portion comprises a plurality of anti-resonance elements for guiding radiation through the hollow core 102. In particular, the plurality of anti-resonance elements are arranged to confine radiation that propagates through the optical fiber 100 predominantly inside the hollow core 102 and to guide the radiation along the optical fiber 100. The hollow core 102 of the optical fiber 100 may be disposed substantially in a central region of the optical fiber 100, so that the axis of the optical fiber 100 may also define an axis of the hollow core 102 of the optical fiber 100.

The cladding portion comprises a plurality of anti-resonance elements for guiding radiation propagating through the optical fiber 100. In particular, in this embodiment, the cladding portion comprises a single ring of six tubular capillaries 104. Each of the tubular capillaries 104 acts as an anti-resonance element.

The capillaries 104 may also be referred to as tubes. The capillaries 104 may be circular in cross section, or may have another shape. Each capillary 104 comprises a generally cylindrical wall portion 105 that at least partially defines the hollow core 102 of the optical fiber 100 and separates the hollow core 102 from a capillary cavity 106. It will be appreciated that the wall portion 105 may act as an anti-reflecting Fabry-Perot resonator for radiation that propagates through the hollow core 102 (and which may be incident on the wall portion 105 at a grazing incidence angle). The thickness of the wall portion 105 may be suitable so as to ensure that reflection back into the hollow core 102 is generally enhanced whereas transmission into the capillary cavity 106 is generally supressed. In some embodiments, the capillary wall portion 105 may have a thickness between 0.01 - 10.0 µm.

It will be appreciated that, as used herein, the term cladding portion is intended to mean a portion of the optical fiber 100 for guiding radiation propagating through the optical fiber 100 (i.e. the capillaries 104 which confine said radiation within the hollow core 102). The radiation may be confined in the form of transverse modes, propagating along the fiber axis.

The support portion 108 is generally tubular and supports the six capillaries 104 of the cladding portion. The six capillaries 104 are distributed evenly around an inner surface of the support portion 108. The six capillaries 104 may be described as being disposed in a generally hexagonal formation.

The capillaries 104 are arranged so that each capillary is not in contact with any of the other capillaries 104. Each of the capillaries 104 is in contact with the support portion 108 and spaced apart from adjacent capillaries 104 in the ring structure. Such an arrangement may be beneficial since it may increase a transmission bandwidth of the optical fiber 100 (relative, for example, to an arrangement wherein the capillaries are in contact with each other). Alternatively, in some embodiments, each of the capillaries 104 may be in contact with adjacent capillaries 104 in the ring structure.

The six capillaries 104 of the cladding portion are disposed in a ring structure around the hollow core 102. An inner surface of the ring structure of capillaries 104 at least partially defines the hollow core 102 of the optical fiber 100. The diameter of the hollow core 102 (which may be defined as the smallest dimension between opposed capillaries, indicated by arrow 114) may be between 10 and 100 µm. The diameter 114 of the hollow core 102 may affect the mode field diameter, impact loss, dispersion, modal plurality, and non-linearity properties of the hollow core optical fiber 100.

In this embodiment, the cladding portion comprises a single ring arrangement of capillaries 104 (which act as anti-resonance elements). Therefore, a line in any radial direction from a center of the hollow core 102 to an exterior of the optical fiber 100 passes through no more than one capillary 104.

It will be appreciated that other embodiments may be provided with different arrangements of anti-resonance elements. These may include arrangements having multiple rings of anti-resonance elements and arrangements having nested anti-resonance elements. Furthermore, although the embodiment shown in Figure 7 comprises a ring of six capillaries, in other embodiments, one or more rings comprising any number of anti-resonance elements (for example 4, 5, 6, 7, 8, 9, 10, 11 or 12 capillaries) may be provided in the cladding portion. Optionally, the support portion 108 may comprise a deformable portion to at least partially isolate the cladding portion from external stresses.

Some embodiments relate to a new type of radiation source comprising a hollow core optical fiber (for example of the type shown in Figure 7); a working medium disposed within the hollow core; and a pulsed pump radiation source arranged to produce pulsed pump radiation that is received by, and propagates through, the hollow core from an input end to an output end. An example of such a radiation source 134 is now described with reference to Figure 8.

Figures 8A and 8B depict two variants of a new radiation source 134 for providing broadband output radiation. The radiation source 134 comprises a pump radiation source 136; an optical fiber 100 (of the type shown in Figure 7) with a hollow core 102; and a working medium 126 (for example a gas) disposed within the hollow core 102. Although in Figures 8A and 8B the radiation source 134 comprises the optical fiber 100 shown in Figure 7, in alternative embodiments other types of hollow core optical fiber may be used.

The pump radiation source 136 is arranged to produce pump radiation 122. The pump radiation 122 may be pulsed radiation. The pump radiation 122 is received by, and propagates through, the hollow core 102 from an input end 110 to an output end 112. The pump radiation 122 may be coupled into the input end 110 of the hollow core 102 by a lens 137. The lens 137 may be an achromatic lens (also referred to as an achromat). The lens 137 may have any desirable focal length. In one example, the lens 137 has a focal length of 80 mm.

The hollow core 102 of the optical fiber 100 is arranged to receive the pump radiation 122 from the pulsed pump radiation source 136, and broaden it to provide output radiation 124. The working medium 126 enables the broadening of the frequency range of the received input radiation 122 so as to provide broadband output radiation 124.

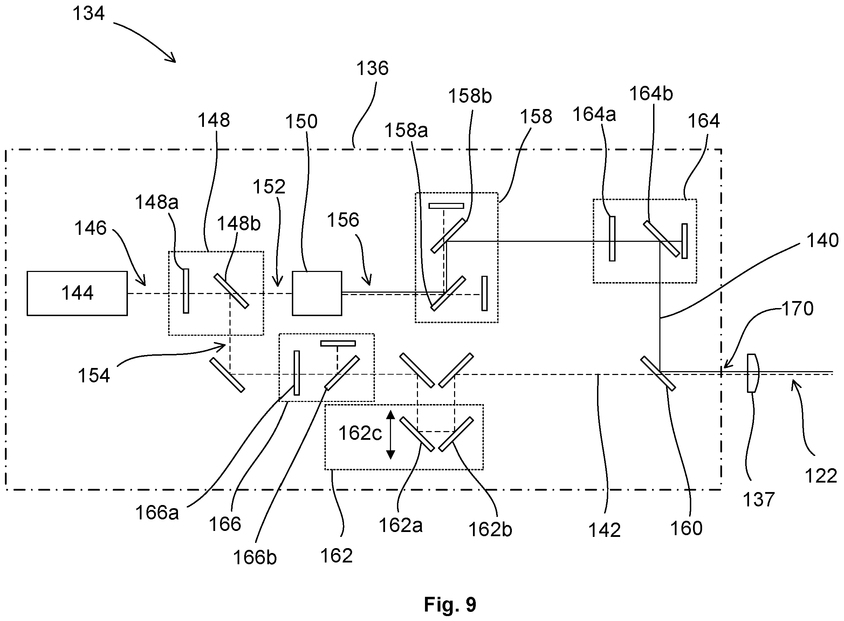

One feature of the new radiation source 134 is that it is operable to generate pump radiation comprising a plurality of wavelength components. Each of the plurality of wavelength components has a bandwidth of less than 50 nm. A power of each of the plurality of wavelength components is at least 10% of the total power of the pump radiation 122. Furthermore, a pressure of the working medium 126 and/or a dimension of the hollow core 102 are such that phase matching conditions for four wave mixing processes involving any two of the plurality of wavelength components are not met. Figure 9 schematically depicts a specific embodiment of a pump radiation source 136 that it is operable to generate pump radiation comprising two wavelength components and which may form part of the new radiation source 134 shown in Figures 8A and 8B. It will be appreciate that in alternative embodiments, the pump radiation source 136 may be operable to generate pump radiation comprising more than two wavelength components.

As discussed further below, the pump radiation 122 comprises a first wavelength component 140 and a second wavelength component 142. The first wavelength component 140 has a smaller wavelength than the second wavelength component 142. In an example embodiment discussed below, the wavelength of the first wavelength 140 component may be of the order of 515 nm and the wavelength of the second wavelength component 142 may be of the order of 1030 nm. The first and second radiation components 140, 142 at least partially spatially and/or temporally overlapping at the exit 170 of the pump radiation source 136 and an entrance 110 of the optical fiber 100.

Each of the first and second wavelength components 140, 142 has a bandwidth of less than 50 nm. A power of each of the first and second wavelength components 140, 142 is at least 10% of the total power of the pump radiation 122. A pressure and composition of the working medium 126 and/or a dimension of the hollow core 102 are such that phase matching conditions for four wave mixing processes involving any two of the first and second wavelength components 140, 142 are not met.

As shown in Figure 9, in some embodiments the pump radiation source 136 comprises a laser 144 operable to generate a first beam of radiation 146 with the wavelength of the second wavelength component 142. The laser 144 may comprise an Ytterbium-based laser. The wavelength of the second wavelength component 142 may be of the order of 1030 nm. In Figure 9, radiation with the wavelength of the second wavelength component 142 is indicated by dashed lines.

The pump radiation source 136 further comprises conversion optics arranged to convert a portion of the first beam of radiation 146 into radiation with the wavelength of the first wavelength component, as now discussed. The conversion optics comprises: splitting optics 148 and a non-linear crystal 150.

The splitting optics 148 is arranged to receive the first radiation beam 144 and to generate second and third radiation beams 152, 154, the third radiation beam 154 forming the second wavelength component. The splitting optics 148 may comprise a beam splitter. In one embodiment, the splitting optics 148 may comprise a half wave plate 148a and a thin film polarizer 148b.

The non-linear crystal 150 is arranged to receive the second radiation beam 152 and to generate therefrom a fourth radiation beam 156 having the wavelength of the first wavelength component 140, the fourth radiation beam 156 forming the first wavelength component 140. As the second beam of radiation 152 passes through the non-linear crystal 150, the fourth beam of radiation 156 is generated. This may be via an even order non-linear optical process such as, for example, second harmonic generation (SHG). In Figure 9, radiation with the wavelength of the first wavelength component 140 is indicated by solid lines.

The non-linear crystal 150 may comprise a lithium triborate (LBO) crystal. The non-linear crystal 150 may have any suitable thickness such as, for example, a thickness of 5 mm. The non-linear crystal 150 may be at any suitable temperature such as, for example, 50 °C.

The output of the non-linear crystal 150 will, in general, comprise a portion with the wavelength of the first wavelength component 140 and a portion with the wavelength of the second wavelength component 142. The pump radiation source 136 may comprise a filter system 158 operable to remove the portion with the wavelength of the second wavelength component 142. In this example, the filter system 158 comprises two dichroic mirrors 158a, 158b.

Rather than using a single laser 144 and conversion optics (including a non-linear crystal 150), in some other embodiments, the pump radiation source 136 may comprise: a first laser operable to generate the first wavelength component 140; and a second laser operable to generate the second wavelength component 142.

The pump radiation source 136 further comprises combining optics 160 arranged to receive the first wavelength component 140 and the second wavelength component 142 and to combine them so that the first and second radiation components 140, 142 at least partially spatio-temporally overlap so as to form the pump radiation 122. The combining optics 160 may, for example, comprise a beam splitter.

Optionally, the pump radiation source 136 may further comprise an adjustment module 162 operable to provide control over spatial and/or temporal overlap of the first wavelength component 140 and the second wavelength component 142. In this example, the adjustment module 162 comprises a movable stage supporting two mirrors 162a, 162b that form part of an optical path of the second wavelength component 142. The movement enabled by the movable stage is indicated schematically by an arrow 162c. The movement enabled by the movable stage provides control over an optical path length of the first wavelength component 142 upstream of combining optics 160.

Optionally, the pump radiation source 136 may further comprise: a first energy control module 164 operable to provide control over an energy of the first wavelength component 140 and/or a second energy control module 166 operable to provide control over an energy of the second wavelength component 142. In one embodiment, the first energy control module 164 may comprise a half wave plate 164a and a thin film polarizer 164b. In one embodiment, the second energy control module 166 may comprise a half wave plate 166a and a thin film polarizer 166b.

Optionally, the pump radiation source 136 may further comprise polarization optics (not shown) arranged to allow for the polarization of each of the first and second wavelength components to be independently controlled.

The radiation source 134 shown in Figure 8 and described above is advantageous, as now discussed.

The inventors have realized that in the specific case of a hollow core optical fiber 100 and a working medium 126 comprising a molecular gas there is significant advantage to providing at least two wavelength components 140, 142 for spectral broadening. In particular, the inventors have found that with such an arrangement there can be a synergy between the first and second wavelength components 140, 142. In particular, the spectrum at the output end of the optical fiber 100 is improved relative to the addition of the two spectra that would result from using the first wavelength component 140 and the second wavelength component 142 separately as pump radiation. This improvement may be an increase in the bandwidth and/or flatness of the output radiation 124.

Furthermore, since the pressure of the working medium 126 and/or the dimension of the hollow core 102 are such that phase matching conditions for four wave mixing processes involving any two of the first and second wavelength components 140, 142 are not met, the amount of energy from the pump radiation 122 that is shifted to four wave mixing resonances is minimal. Advantageously, this allows for more of the pump energy to contribute to a broadband continuum output radiation, further enhancing the spectral broadening that is achieved.

Since the power of the first and second wavelength components 140, 142 is at least 10% of the total power of the pump radiation 122, the first and second wavelength components 140, 142 each act as significant pumps for the spectral broadening. This is rather than, for example, the first and second wavelength components 140, 142 merely acting as seeds with minimal pumping energy.

It will be appreciated that in some embodiments the pump radiation 122 may comprise pulsed radiation and each of the first and second wavelength components 140, 142 may also comprise pulsed radiation. It will also be appreciated that for such embodiments, in order for the power of each of the first and second wavelength components 140, 142 to be at least 10% of the total power of the pump radiation 122, a pulse energy of each of the first and second wavelength components 140, 142 may be at least 10% of the total pulse energy of the pump radiation 122.

It will be appreciated that if the characteristic (typically the pressure) of the working medium 126 and/or the configuration of the hollow core optical fiber (typically a dimension of the hollow core 102) are such that phase matching conditions for four wave mixing processes involving any two of the first and second wavelength components 140, 142 are not met then there may not be any significant four wave mixing peaks in the spectrum of the output radiation 124. The characteristic of the working medium 126 and/or the configuration of the hollow core optical fiber (for example a dimension of the hollow core 102) being such that phase matching conditions for four wave mixing processes involving the first and second wavelength components 140, 142 are not met may mean that a coherence length L_{c,FWM} of the four-wave mixing process is significantly less than the length L of the optical fibre 100. For example, the coherence length L_{c,FWM} of the four-wave mixing process may be less than L/10 (i.e. L_{c,FWM} < L/10).

In some embodiments, the gain medium 126 and the optical fiber 100 may be configured so as to maximise a vibrational Raman gain within the hollow core 102. In some embodiments, a zero dispersion wavelength of the optical fiber 100 may be greater than the wavelength of the first wavelength component 140. That is, parameters of the optical fiber 100 and the working medium 126 may be configured such that the zero dispersion wavelength of the optical fiber 100 is greater than the wavelength of the first wavelength component 140. In an example embodiment discussed below, the zero dispersion wavelength of the optical fiber 100 is 800 nm and the wavelength of the first wavelength 140 component is of the order of 515 nm.

Since the zero dispersion wavelength of the optical fiber 100 is longer than the wavelength of the first wavelength component 140, the first wavelength component 140 is under a normal dispersion regime. Furthermore, the working medium 126 comprises a molecular gas. Therefore, the first wavelength component 140 acts as a pump for stimulated Raman scattering (SRS). Under such a regime, the first wavelength component 140 is partially converted into a plurality of different discrete wavelengths via Stokes scattering and anti-Stokes scattering. This may generate a vibrational frequency comb with distinct equally-spaced peaks. With sufficient input energy of the first wavelength component 140 and after a sufficient propagation length in the optical fiber 100 these discrete wavelengths will undergo spectral broadening due to the rotational Raman and the Kerr effect. This causes these peaks to merge together to generate a substantially continuous spectrum of radiation. Such a process may be referred to as a comb-to-continuum process. The pump radiation source 136 may operate with longer pulses (of the order of 100s of femtoseconds) than are typically required for more traditional supercontinuum generation such as self-phase modulation and soliton self-compression. Advantageously, the first wavelength component 140 being under a normal dispersion regime allows for supercontinuum generation with such pulse lengths without using modulation instability. Although modulation instability enables access to supercontinuum formation with such longer pump pulses (than are typically required for more traditional supercontinuum generation such as self-phase modulation and soliton self-compression), such supercontinua formed via modulation instability typically exhibits high relative intensity noise and low temporal coherence, which may be undesirable.

In fact, SRS-based supercontinuum sources that are pumped with radiation in green input pump radiation (515-532 nm) have been demonstrated. However, such SRS-based supercontinuum sources typically require the use of moderately high pump pulse energy (for example ≥ 10 µJ). High pump pulse energies are not always available and they can limit the lifetime of the optical fiber at higher average powers. Such a pulse energy requirement also makes the pump radiation source (typically a laser system) costly. In addition, such a green-pumped SRS-based supercontinuum typically generates less infrared radiation than may be desired.

The inventors have realized that in the specific case of a hollow core optical fibers, a working medium 126 comprising a molecular gas, and a pump radiation comprising a component (the first wavelength component 140) in a normal dispersion regime there is significant advantage to also providing at least one additional, higher wavelength component (the second wavelength component 142). In particular, the inventors have found that with such an arrangement there can be a synergy between the first and second wavelength components 140, 142. In particular, the spectrum at the output end of the optical fiber 100 is improved relative to the addition of the two spectra that would result from using the first wavelength component 140 and the second wavelength component 142 separately as pump radiation. This improvement may be an increase in the bandwidth and/or flatness of the output radiation 124.

Without wishing to be bound by any specific theory, it is thought that the presence of the first wavelength component 140 may reduce a threshold for spectral broadening by the second wavelength component 142. Again, without wishing to be bound by any specific theory, it is thought that this may be due to the time scale over which the Raman modes excited by the first wavelength component 140 being sufficiently long to aid the spectral broadening by the second wavelength component 142. In particular, it is thought that this effect is specific to, or at least enhanced in, arrangements using SRS-based supercontinuum using a working medium 126 comprising a molecular gas.

It will be appreciated that the zero dispersion wavelength of the optical fiber 100 may be selected or controlled by appropriate selection or control over the pressure of the working medium 126 and the dimension of the hollow core 102.

In some embodiments, the pump radiation 122 may comprise additional wavelength components having a larger wavelength than the first wavelength component 140, which at least partially spatially and/or temporally overlap with the first and second wavelength components 140, 142 at an entrance 110 of the optical fiber 100. The presence of the first wavelength component 140 may act to enhance spectral broadening of the second wavelength component 142 and any such additional wavelength components.

An example of enhanced spectral broadening using the new radiation source 134 described above (using pump radiation 122 comprising first and second wavelength components 140, 142) is now discussed with reference to Figures 10A, 10B, 10C and 11.

Figures 10A, 10B and 10C each show a two-dimensional plot of the spectral energy density achieved at the output end 112 of the optical fiber 100 as a function of the pulse energy of the input pump radiation 122. Figure 10A shows the case where the input pump radiation 122 comprises radiation having a wavelength of 515 nm only; Figure 10B shows the case where the input pump radiation 122 comprises radiation having a wavelength of 1030 nm only; and Figure 10C shows the case where the input pump radiation 122 comprises radiation having both wavelength components (515 nm and 1030 nm). Figure 10C shows the spectral energy density achieved at the output end 112 of the optical fiber 100 as a function of the pulse energy of the 515 nm component while the pulse energy of the 1030 nm component is fixed at 2 µJ. Figure 10C shows the specific case where the two radiation components of the pump radiation 122 are linearly polarized and aligned.

Figure 11 shows three one-dimensional plots 180, 182, 184 of the spectral energy density achieved at the output end 112 of the optical fiber 100, each corresponding to one of the three cases shown in Figures 10A to 10C respectively but for a single input pulse energy. The first one-dimensional plot 180 is the spectral energy density achieved at the output end 112 of the optical fiber 100 when pumping with the 515 nm component only with a pulse energy of 10 µJ. The second one-dimensional plot 182 is the spectral energy density achieved at the output end 112 of the optical fiber 100 when pumping with the 1030 nm component only with a pulse energy of 2 µJ. The third one-dimensional plot 184 is the spectral energy density achieved at the output end 112 of the optical fiber 100 when pumping with the 515 nm component with a pulse energy of 10 µJ and an additional 1030 nm component with a pulse energy of 2 µJ.

The results shown in Figures 10 and 11 are for an optical fiber 100 of the type shown in Figure 7, having a core diameter 114 of 32 µm, a length of 1.5 m and being filled with deuterium 126 at a pressure of 40 bar. The 1030 nm component has a pulse duration of around 500 fs and the 515 nm component has a pulse duration of around 400 fs. Coupling of the pump radiation 122 into the hollow core 102 of the fiber 100 may be optimized using mirrors upstream of the combining optics 160.

It is clear from Figure 11 that the spectrum 184 at the output end of the optical fiber 100 when using the two wavelength components is improved relative to the addition of the two spectra 180, 182 that would result from using the first wavelength component 140 and the second wavelength component 142 separately as pump radiation. In particular, an enhanced infrared spectral coverage (1000-1600 nm) is evident in the dual-pump case (see plot 184). With the new radiation source 134 described above (using pump radiation 122 comprising first and second wavelength components 140, 142 at 515 nm and 1030 nm) supercontinuum formation is achieved even at low 515 nm pulse energies (of the order of a few µJ) without compromising the content in the visible spectral range.

Comparing the spectrum 180 using only 515 nm pump radiation and the spectrum 184 using both 515 nm and 1030 nm, it can be seen that the additional 2 µJ seeding at 1030 nm almost doubles the spectral content between 950 and 1150 nm and provides a large energy transfer to the region between 1150-1600 nm.

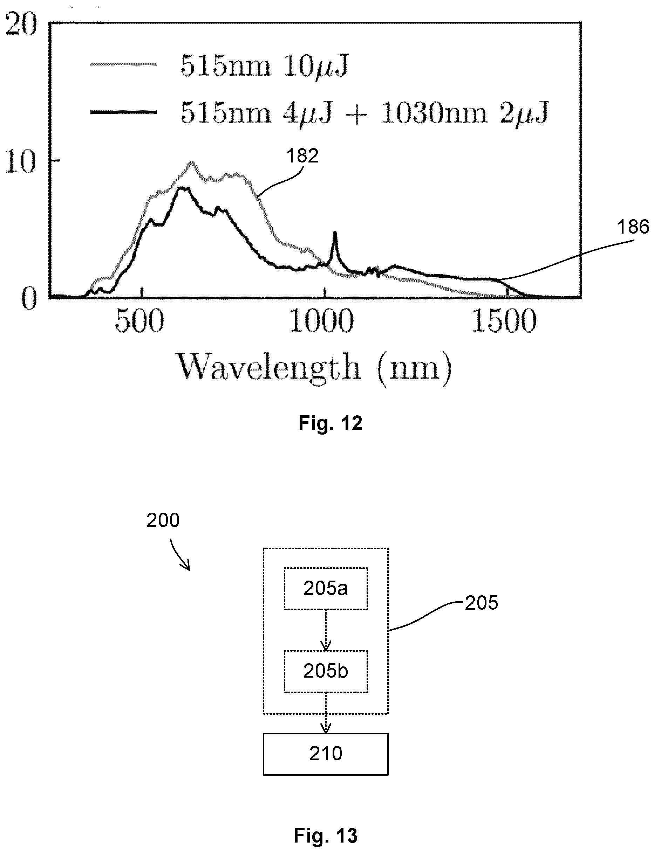

In addition to producing enhanced spectral broadening, another benefit of dual-pumping with both 515 nm and 1030 nm pulses is a significant decrease of the net energy requirements, as now discussed with reference to Figure 12.

Figure 12 shows the same spectral energy density plot 180 shown in Figure 11 achieved when pumping with the 515 nm component only with a pulse energy of 10 µJ. Figure 12 also shows another spectral energy density plot 186 achieved at the output end 112 of the optical fiber 100 when pumping with the 515 nm component with a pulse energy of 4 µJ and an additional 1030 nm component with a pulse energy of 2 µJ.

Typically, 515 nm radiation is generated from 1030 nm radiation using second harmonic generation (since lasers that can produce 1030 nm are readily available). Assuming a typical 50% second harmonic energy conversion, in order to generate 515 nm radiation with pulse energies of 10 µJ (as used to obtain the spectrum 180 shown in Figures 11 and 12), 1030 nm radiation having pulse energies of 20 µJ is used. Assuming the same 50% second harmonic energy conversion, in order to generate 515 nm radiation with pulse energies of 4 µJ and 1030 nm radiation having pulse energies of 2 µJ (as used to obtain the spectrum 186 shown in Figure 12), 1030 nm radiation having pulse energies of 10 µJ is used. Therefore from Figure 12, it can be seen that with dual-pumping an output spectrum 186 with higher spectral content in the infrared and comparable content in the visible region (as compared to the single pump spectrum 182) can be achieved with half the net energy requirements of the single-pump spectrum 182. Therefore, by an appropriate selection of the pulse energies of the first and second wavelength components 140, 142 the total energy consumption can be reduced by at least 50%, while improving the extent of the supercontinuum. In addition, this can greatly benefit power scaling of the supercontinuum as less energetic pulses are less prone to induce fiber damage at higher average power.

The advantage of the decreased energy requirements provided by the duel-pumping arrangement can also be provided by switching to a smaller core fiber for supercontinuum generation.

In some embodiments, a power of each of the two wavelength components 140, 142 may be at least 15% of the total power of the pump radiation. In some embodiments, a power of each of the two wavelength components 140, 142 may be at least 20% of the total power of the pump radiation. In some embodiments, a power of each of the two wavelength components 140, 142 may be at least 25% of the total power of the pump radiation. In some embodiments, a power of each of the two wavelength components 140, 142 may be at least 30% of the total power of the pump radiation. In some embodiments, a power of each of the two wavelength components 140, 142 may be at least 35% of the total power of the pump radiation.

In some embodiments, a power of one of the first and second wavelength components 140, 142 may be at least 50% of the total power of the pump radiation.

Since each of the first and second wavelength components 140, 142 has a bandwidth of 50 nm or less, the first and second wavelength components 140, 142 may each be considered to comprise monochromatic radiation. In some embodiments, each of the plurality of wavelength components 140, 142 has a bandwidth of 40 nm or less. In some embodiments, each of the plurality of wavelength components 140, 142 has a bandwidth of 30 nm or less. In some embodiments, each of the plurality of wavelength components 140, 142 has a bandwidth of 20 nm or less.

In some embodiments, the zero dispersion wavelength of the optical fiber 100 is less than the wavelength of the second wavelength component 142. If the pump radiation 122 comprises a wavelength component 142 having a wavelength that is greater than the zero dispersion wavelength of the optical fiber then this will be under an anomalous dispersion regime. In one example embodiment, the zero dispersion wavelength of the optical fiber 100 is 800 nm, the wavelength of the first wavelength component 140 is of the order of 515 nm and the wavelength of the second wavelength component 142 is of the order of 1030 nm. Such an arrangement has been found to have better spectral broadening, particularly in the infrared region of the spectrum as compared to pumping with the first wavelength 140 component alone. Initial numerical simulations suggests that the infrared part of this continuum is formed through the Raman-soliton supercontinuum process, and that the coherence and noise properties can be significantly enhanced with respect to modulational-instability based supercontinuum, while maintaining a flat and smooth spectrum and high spectral power density.

Additionally or alternatively, for embodiments wherein the pump radiation comprises a wavelength component 142 that is under an anomalous dispersion regime may allows for spectral broadening of the second wavelength component 142 via modulation instability (MI). Significant spectral broadening under such a regime also typically requires high pump pulse intensity and, in addition, the gas pressure used in the optical fiber 100 is typically tightly controlled such that a zero dispersion point is close to the pump wavelength. However, it has been found that in the presence of the first wavelength component 140 (in the normal dispersion regime), enhanced spectral broadening of the second wavelength component 142 via modulation instability can be achieved.

The radiation source 134 may further comprise a reservoir 128 (see Figure 8A). The optical fiber 100 may be disposed inside the reservoir 128. The reservoir 128 may also be referred to as a housing or container. The reservoir 128 is configured to contain the working medium 126. The reservoir 128 may comprise one or more features, known in the art, for controlling, regulating, and/or monitoring the composition of the working medium 126 (which comprises a molecular gas) inside the reservoir 128. The reservoir 128 may comprise a first transparent window 130. In use, the optical fiber 100 may be disposed inside the reservoir 128 such that the first transparent window 130 is located proximate to an input end of the optical fiber 100. The first transparent window 130 may form part of a wall of the reservoir 128. The first transparent window 130 may be transparent for at least the received pump radiation 122 frequencies, so that received pump radiation 122 (or at least a large portion thereof) may be coupled into the optical fiber 100 located inside reservoir 128. It will be appreciated that optics (not shown) may be provided for coupling the input radiation 122 into the optical fiber 100.

The reservoir 128 may also comprise a second transparent window 132, forming part of a wall of the reservoir 128. In use, when the optical fiber 100 may be disposed inside the reservoir 128, the second transparent window 132 may be located proximate to an output end of the optical fiber 100. The second transparent window 132 may be transparent for at least the frequencies of the broadband output radiation 124 of the radiation source 134.

Alternatively, in another embodiment, the two opposed ends of the optical fiber 100 may be placed inside different reservoirs 128A, 128B (see Figure 8B). The optical fiber 100 may comprise a first end section configured to receive pump radiation 122, and a second end section for outputting broadband output radiation 124. The first end section may be placed inside a first reservoir 128A, comprising a working medium 126. The second end section may be placed inside a second reservoir 128B, wherein the second reservoir 128B may also comprise a working medium 126. The functioning of the reservoirs 128A, 128B may be as described in relation to Figure 8 above. The first reservoir 128A may comprise a first transparent window 130, configured to be transparent for pump radiation 122. The second reservoir 128B may comprise a second transparent window 132 configured to be transparent for broadband output broadband radiation 124. The first and second reservoirs 128A, 128B may also comprise a sealable opening to permit the optical fiber 100 to be placed partially inside and partially outside the reservoirs 128A, 128B, so that a gas 126 can be sealed inside the reservoirs 128A, 128B. The optical fiber 100 may further comprise a middle section not contained inside a reservoir. Such an arrangement using two separate gas reservoirs 128A, 128B may be particularly convenient for embodiments wherein the optical fiber 100 is relatively long (for example when the length is more than 1 m). It will be appreciated that for such arrangements which use two separate gas reservoirs 128A, 128B, the two reservoirs 128A, 128B (which may comprise one or more features, known in the art, for controlling, regulating, and/or monitoring the composition of a gas inside the two reservoirs 128A, 128B) may be considered to provide an apparatus for providing the working medium 126 within the hollow core 102 of the optical fiber 100.

In this context a window may be transparent for a frequency if at least 50%, 75%, 85%, 90%, 95%, or 99% of incident radiation of that frequency on the window is transmitted through the window.

Both the first 130 and the second 132 transparent windows may form an airtight seal within the walls of the reservoir 128 so that the working medium 126 (which comprises a molecular gas) may be contained within the reservoir 128. It will be appreciated that the gas 126 may be contained within the reservoir 128 at a pressure different to the ambient pressure of the reservoir 128.

The working medium 126 comprises a molecular gas. The molecular gas 126 may, for example, comprise hydrogen or deuterium. Additionally or alternatively, the molecular gas 126 may comprise one or more of N₂, O₂, N₂O, CH₄ and SF₆.

It will be appreciated that the working medium 126 may comprise other components in addition to the molecular gas. In some embodiments, the molecular gas may be a dominant component of the working medium. In general, there may be a sufficient quantity of the molecular gas to drive the broadening dynamics. The working medium may comprise between 10% and 100% molecular gas, as judged by partial pressure.

Optionally, the working medium 126 may further comprise a noble gas. For example, the working medium 126 may comprise one or more of Argon, Krypton, Neon, Helium and Xenon.

The working medium 126 may be under a pressure of the order of 1 bar to 200 bar. For example, the working medium 126 may be under a pressure of the order of 40 bar.

In one implementation, the working medium 126 may be disposed within the hollow core 102 at least during receipt of pump radiation 122 for producing broadband output radiation 124. It will be appreciated that, while the optical fiber 100 is not receiving pump radiation 122 for producing broadband output radiation, the gas 126 may be wholly or partially absent from the hollow core 102.

In order to achieve frequency broadening high intensity radiation may be desirable. An advantage of having a hollow core optical fibre 100 is that it may achieve high intensity radiation through strong spatial confinement of radiation propagating through the optical fiber 100, achieving high localised radiation intensities. The radiation intensity inside the optical fiber 100 may be high, for example due to high received input radiation intensity and/or due to strong spatial confinement of the radiation inside the optical fiber 100. An advantage of hollow core optical fibres is that they can guide radiation having a broader wavelength range that solid-core fibers and, in particular, hollow core optical fibres can guide radiation in both the ultraviolet and infrared ranges.

An advantage of using a hollow core optical fiber 100 may be that the majority of the radiation guided inside the optical fiber 100 is confined to the hollow core 102. Therefore, the majority of the interaction of the radiation inside the optical fiber 100 is with the working medium 126, which is provided inside the hollow core 102 of the optical fiber 100. As a result, the broadening effects of the working medium 126 on the radiation may be increased.

The broadband range of the output radiation 124 may be a continuous range, comprising a continuous range of radiation frequencies. The output radiation 124 may comprise supercontinuum radiation. Continuous radiation may be beneficial for use in a number of applications, for example in metrology applications. For example, the continuous range of frequencies may be used to interrogate a large number of properties. The continuous range of frequencies may for example be used to determine and/or eliminate a frequency dependency of a measured property. Supercontinuum output radiation 124 may comprise for example electromagnetic radiation over a wavelength range of 100 nm - 4000 nm. The broadband output radiation 124 frequency range may be for example 400 nm - 900 nm, 500 nm - 900 nm, or 200 nm - 2000 nm. The supercontinuum output radiation 124 may comprise white light.

The hollow core optical fiber which forms part of the new radiation source 134 may be generally of the form of the optical fiber 100 shown in Figure 7 and described above.

An inner dimension of the hollow core optical fiber 100 may be of the order of 10 µm to 100 µm. For example, an inner dimension of the hollow core optical fiber 100 may be of the order of 20 µm to 50 µm. For example, an inner dimension of the hollow core optical fiber 100 may be of the order of 30 µm.

In some embodiments, the hollow core optical fiber 100 comprises an anti-resonance hollow core fiber (e.g. of the type shown in Figure 7). Such anti-resonance hollow core fiber can have resonances which can significantly affect the local dispersion profile of the fiber. In turn, this can affect phase-matching within the optical fiber 100.

Therefore, for such embodiments wherein the hollow core optical fiber 100 comprises an anti-resonance hollow core fiber, the optical fiber 100 may be arranged such that none of the resonances of the optical fiber coincide with, and are not close to, a wavelength that corresponds to a peak wavelength for four wave mixing processes involving any two of the plurality of wavelength components 140, 142. It will be appreciated by the skilled person that the resonance(s) of such an anti-resonance hollow core fiber may be selected or controlled by suitable selection or control of a thickness of the walls 105 of anti-resonance elements 104 (for example capillaries) that surround the hollow core 102 and serve to guide radiation through the hollow core 102.

The hollow core optical fiber 100 may, for example, comprise a cladding portion surrounding the hollow core 102, the cladding portion comprising a plurality of anti-resonance elements 104 for guiding radiation through the hollow core 102. Each of the plurality of anti-resonance elements 104 may comprise a capillary.

The plurality of anti-resonance elements 104 of the cladding portion may be disposed in a ring structure around the hollow core 102. For example, in one embodiment the cladding portion may comprise a single ring of 6 anti-resonance elements 104 (capillaries) surrounding the hollow core 102 (as shown in Figure 7). It will be appreciated that other topologies could be used in other embodiments.

The plurality of anti-resonance elements 104 may be arranged so that each of the anti-resonance elements 104 is not in contact with any of the other anti-resonance elements 104.

In general, the pump radiation 122 may be pulsed. In general, the parameters of the radiation source may be selected as follows.

A pulse duration, a pulse energy, and optical fiber hollow core 102 dimension and length may be selected to ensure that sufficient nonlinear effects are stimulated so as to obtain spectral broadening. This may involve selecting the pulse duration, pulse energy and hollow core dimension to ensure a sufficient peak spatial power density in the optical fiber to ensure sufficient nonlinear effects are stimulated. In addition, the length of the optical fiber 100 may be selected so as to ensure these nonlinear effects generate a desired level of spectral broadening by the end of the optical fiber 100. In some embodiments, a peak intensity of the pump radiation 122 at the input end 110 of the optical fibre 100 may be between 10¹² and 2×10¹³ W/cm².

The parameters of the radiation source 134 may be scalable.

In some embodiments, the pump radiation 122 may be pulsed and may have a repetition rate of 1 kHz or above. In some embodiments, the pump radiation 122 may be pulsed and may have a repetition rate of 1 MHz or above.

In some embodiments, the pump radiation 122 may be pulsed and may have a pulse duration between 50 fs and 10 ps. In some embodiments, the pump radiation 122 may be pulsed and may have a pulse duration between 100 fs and 1 ps. In some embodiments, the pump radiation 122 may have a pulse duration of the order of 100 fs.

In some embodiments, the pump radiation 122 may be pulsed and each pulse may have a pulse energy of between 1 µJ and 100 µJ. For example, each pulse may have a pulse energy of between 1 µJ and 10 µJ. In one example embodiment, the first wavelength component 140 of each pulse has an energy of 4 µJ and the second wavelength component 142 of each pulse has an energy of 2 µJ.

In some embodiments, the optical fiber 100 may have a length of between 10 cm and 10 m. For example, the optical fiber 100 may have a length of between 0.5 m and 1.5 m. For example, the optical fiber 100 may have a length of around 1 m.

In some embodiments, the pump radiation source 136 may be arranged such that the first wavelength component 140 and the second wavelength component 142 are polarized. For example, the first wavelength component 140 and the second wavelength component 142 may be linearly polarized. Alternatively, the first wavelength component 140 and the second wavelength component 142 may be circularly polarized.

Some embodiments of the present disclosure relate to a metrology apparatus for determining a parameter of interest of a structure on a substrate W, the metrology apparatus comprising: the new radiation source 134 as shown in Figures 8A to 9 and as described above. In general, such a metrology apparatus may further comprise: an illumination sub-system for illuminating the structure on the substrate W using the broadband output radiation; and a detection sub-system for detecting a portion of radiation scattered and/or reflected by the structure, and for determining the parameter of interest from said portion of radiation.

Some embodiments of the present disclosure relate to a lithographic apparatus comprising such a metrology apparatus.

Some embodiments of the present disclosure relate to a method for broadband radiation generation. An example of such a method 200 is shown schematically in Figure 13.

The method 200 comprises a step 210 of directing pump radiation 122 through a hollow core optical fiber 100 with a working medium 126 comprising a molecular gas disposed within the hollow core 102. The pump radiation 122 comprises a plurality of wavelength components (for example at least a first wavelength component 140 and a second wavelength component 142. The plurality of radiation components 140, 142 at least partially spatially and/or temporally overlapping at an entrance of the optical fiber 100. An energy of each of the plurality of wavelength components 140, 142 is at least 10% of the total energy of the pump radiation 122. A characteristic (pressure for example) of the working medium 126 and/or a configuration of the hollow core optical fiber (like a dimension of the hollow core 102) may be such that phase matching conditions for four wave mixing processes involving any two of the plurality of wavelength components 140, 142 are not met

The method 200 shown in Figure 13 may be carried out using the radiation source 134 shown in Figures 8A to 9 and as described above. The method 200 shown in Figure 13 may comprise features corresponding to any combination of the features of the radiation source 134 shown in Figures 8A to 9 as described above.

As explained above, the inventors have found that with such an arrangement there can be a synergy between the first and second wavelength components 140, 142. In particular, the spectrum at the output end 112 of the optical fiber 100 is improved relative to the addition of the two spectra that would result from using the first wavelength component 140 and the second wavelength component 142 separately as pump radiation. This improvement may be an increase in the bandwidth and/or flatness of the output radiation 124. Furthermore, since the pressure of the working medium 126 and/or the dimension of the hollow core 102 are such that phase matching conditions for four wave mixing processes involving any two of the plurality of wavelength components 140, 142 are not met, the amount of energy from the pump radiation 122 that is shifted to four wave mixing resonances is minimal. Advantageously, this allows for more of the pump energy to contribute to a broadband continuum output radiation, further enhancing the spectral broadening that is achieved.

Optionally, the method 200 may further comprise a step 205 of generating the pump radiation 122.

Optionally, generating the pump radiation 122 may comprise: a sub-step 205a of generating a first beam of radiation with the wavelength of the second wavelength component 142; and a sub-step 205b of converting a portion of the first beam of radiation into radiation with the wavelength of the first wavelength component 140. The sub-step 205b of converting a portion of the first beam of radiation into radiation with the wavelength of the first wavelength component 140 may be achieved using second harmonic generation.

Optionally, the method may further comprise controlling a spatial and/or temporal overlap of the first wavelength component 140 and the second wavelength component 142.

The metrology arrangement described above may form part of a metrology apparatus MT. The metrology arrangement described above may form part of an inspection apparatus. The metrology arrangement described above may be included inside a lithographic apparatus LA.

Further embodiments of the invention are disclosed in the list of numbered clauses below:
1. A radiation source comprising: a hollow core optical fiber comprising a body having a hollow core filled with a working medium comprising a molecular gas; and a pump radiation source arranged to produce pump radiation that is received by, and propagates through, the hollow core from an input end to an output end; wherein the pump radiation comprises a plurality of wavelength components, each having a bandwidth of 50 nm or less, the plurality of wavelength components at least partially spatially and/or temporally overlapping at an entrance of the optical fiber; wherein a power of each of the plurality of wavelength components is at least 10% of the total power of the pump radiation; and wherein a characteristic of the working medium and/or a configuration of the hollow core optical fiber are such that phase matching conditions for four wave mixing processes involving any two of the plurality of wavelength components are not met.
2. The radiation source of clause 1 wherein the plurality of wavelength components comprises a first wavelength component and a second wavelength component, the first component having a smaller wavelength than the second wavelength component; and wherein a zero dispersion wavelength of the optical fiber is greater than the wavelength of the first wavelength component.
3. The radiation source of clause 2 wherein the zero dispersion wavelength of the optical fiber is less than the wavelength of the second wavelength component.
4. The radiation source of any preceding clause wherein the pump radiation source comprises: a laser operable to generate a first beam of radiation with the wavelength of a second wavelength component of the plurality of wavelength components; and conversion optics arranged to convert a portion of the first beam of radiation into radiation with the wavelength of a first wavelength component of the plurality of wavelength components.
5. The radiation source of clause 4 wherein the conversion optics comprises: splitting optics arranged to receive the first radiation beam and to generate second and third radiation beams, the third radiation beam forming the second wavelength component; and a non-linear crystal arranged to receive the second radiation beam and to generate therefrom a fourth radiation beam having the wavelength of the first wavelength component, the fourth radiation beam forming the first wavelength component.
6. The radiation source of any one of clauses 1 to 3 wherein the pump radiation source comprises: a first laser operable to generate a first wavelength component of the plurality of wavelength components; and a second laser operable to generate a second wavelength component of the plurality of wavelength components.
7. The radiation source of clause 5 or clause 6 further comprising combining optics arranged to receive the first wavelength component and the second wavelength component and to combine them so that the first and second radiation components at least partially spatio-temporally overlap.
8. The radiation source of clause 7 further comprising an adjustment module operable to provide control over spatial and/or temporal overlap of the first wavelength component and the second wavelength component.
9. The radiation source of any preceding clause wherein an inner dimension of the hollow core is between 10 µm and 100 µm.
10. The radiation source of any preceding clause wherein the hollow core optical fiber comprises a cladding portion surrounding the hollow core, the cladding portion comprising a plurality of anti-resonance elements for guiding radiation through the hollow core.
11. The radiation source of clause 10 wherein the plurality of anti-resonance elements of the cladding portion are disposed in a ring structure around the hollow core.
12. The radiation source of clause 10 or clause 11 wherein the plurality of anti-resonance elements is arranged so that each of the anti-resonance elements is not in contact with any of the other anti-resonance elements.
13. The radiation source of any preceding clause wherein the pump radiation is pulsed and has a repetition rate of 1 MHz or above.
14. The radiation source of any preceding clause wherein the pump radiation is pulsed and has a pulse duration between 50 fs and 10 ps.
15. The radiation source of any preceding clause wherein the pump radiation is pulsed and each pulse has a pulse energy of between 1 µJ and 100 µJ.
16. The radiation source of any preceding clause wherein the optical fiber has a length of between 10 cm and 10 m.
17. The radiation source of any preceding clause wherein the molecular gas comprises hydrogen or deuterium.
18. The radiation source of any preceding clause wherein the working medium is under a pressure of the order between 1 bar and 200 bar.
19. The radiation source of any preceding clause wherein the pump radiation source is arranged such that the plurality of wavelength components are polarized.
20. A metrology arrangement for determining a parameter of interest of a structure on a substrate, the metrology arrangement comprising: the radiation source of any preceding clause; an illumination sub-system for illuminating the structure on the substrate using the broadband output radiation; and a detection sub-system for detecting a portion of radiation scattered and/or reflected by the structure, and for determining the parameter of interest from said portion of radiation.
21. A lithographic apparatus comprising the metrology arrangement according to clause 20.
22. A method for broadband radiation generation, the method comprising: directing pump radiation through a hollow core optical fiber with working medium comprising a molecular gas disposed within the hollow core; wherein the pump radiation comprises a plurality of wavelength components, each having a bandwidth of 50 nm or less, the plurality of wavelength components at least partially spatially and/or temporally overlapping at an entrance of the optical fiber; wherein a power of each of the plurality of wavelength components is at least 10% of the total power of the pump radiation; and wherein a characteristic of the working medium and/or a configuration of the hollow core optical fiber are such that phase matching conditions for four wave mixing processes involving any two of the plurality of wavelength components are not met.
23. The method of clause 22 wherein the plurality of wavelength components comprises a first wavelength component and a second wavelength component, the first component having a smaller wavelength than the second wavelength component; and wherein a zero dispersion wavelength of the optical fiber is greater than the wavelength of the first wavelength component.
24. The method of clause 23 wherein the zero dispersion wavelength of the optical fiber is less than the wavelength of the second wavelength component.
25. The method of any one of clauses 22 to 24 further comprising generating the pump radiation.
26. The method of clause 25 wherein generating the pump radiation comprises: generating a first beam of radiation with the wavelength of a second wavelength component of the plurality of wavelength components; and converting a portion of the first beam of radiation into radiation with the wavelength of a first wavelength component of the plurality of wavelength components.
27. The method of clause 26 wherein converting a portion of the first beam of radiation into radiation with the wavelength of the first wavelength component is achieved using second harmonic generation.
28. The method of any one of clauses 22 to 27 further comprising controlling a spatial and/or temporal overlap of the plurality of wavelength components.
29. The method of any preceding clause wherein an inner dimension of the hollow core is between 10 µm and 100 µm.
30. The method of any one of clauses 22 to 28 wherein the pump radiation is pulsed and has a repetition rate of 1 MHz or above.
31. The method of any one of clauses 22 to 30 wherein the pump radiation is pulsed and has a pulse duration between 50 fs and 10 ps.
32. The method of any one of clauses 22 to 31 wherein the pump radiation is pulsed and each pulse has a pulse energy of between 1 µJ and 100 µJ.
33. The method of any one of clauses 22 to 32 wherein the optical fiber has a length of between 10 cm and 10 m.
34. The method of any one of clauses 22 to 33 wherein the molecular gas comprises hydrogen or deuterium.
35. The method of any one of clauses 22 to 34 wherein the working medium is under a pressure of the order of between 1 bar and 200 bar.
36. The method of any one of clauses 22 to 35 further comprising polarizing the plurality of wavelength components.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

Although specific reference is made to "metrology apparatus / tool / system" or "inspection apparatus / tool / system", these terms may refer to the same or similar types of tools, apparatuses or systems. E.g. the inspection or metrology apparatus that comprises an embodiment of the invention may be used to determine characteristics of structures on a substrate or on a wafer. E.g. the inspection apparatus or metrology apparatus that comprises an embodiment of the invention may be used to detect defects of a substrate or defects of structures on a substrate or on a wafer. In such an embodiment, a characteristic of interest of the structure on the substrate may relate to defects in the structure, the absence of a specific part of the structure, or the presence of an unwanted structure on the substrate or on the wafer.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A radiation source comprising:
a hollow core optical fiber comprising a body having a hollow core filled with a working medium comprising a molecular gas; and
a pump radiation source arranged to produce pump radiation that is received by, and propagates through, the hollow core from an input end to an output end;
wherein the pump radiation comprises a plurality of wavelength components, each having a bandwidth of 50 nm or less, the plurality of wavelength components at least partially spatially and/or temporally overlapping at an entrance of the hollow core optical fiber;
wherein a power of each of the plurality of wavelength components is at least 10% of the total power of the pump radiation; and
wherein a characteristic of the working medium and/or a configuration of the hollow core optical fiber are such that phase matching conditions for four wave mixing processes involving any two of the plurality of wavelength components are not met.

2. The radiation source of claim 1, wherein the plurality of wavelength components comprises a first wavelength component and a second wavelength component, the first component having a smaller wavelength than the second wavelength component; and wherein a zero dispersion wavelength of the hollow core optical fiber is greater than the wavelength of the first wavelength component.

3. The radiation source of claim 2, wherein the zero dispersion wavelength of the hollow core optical fiber is less than the wavelength of the second wavelength component.

4. The radiation source of any preceding claim, wherein the pump radiation source comprises:
a laser operable to generate a first beam of radiation with the wavelength of a second wavelength component of the plurality of wavelength components; and
conversion optics arranged to convert a portion of the first beam of radiation into radiation with the wavelength of a first wavelength component of the plurality of wavelength components.

5. The radiation source of claim 4, wherein the conversion optics comprises:
splitting optics arranged to receive the first radiation beam and to generate second and third radiation beams, the third radiation beam forming the second wavelength component; and
a non-linear crystal arranged to receive the second radiation beam and to generate therefrom a fourth radiation beam having the wavelength of the first wavelength component, the fourth radiation beam forming the first wavelength component.

6. The radiation source of any one of claims 1 to 3, wherein the pump radiation source comprises:
a first laser operable to generate a first wavelength component of the plurality of wavelength components; and
a second laser operable to generate a second wavelength component of the plurality of wavelength components.

7. The radiation source of claim 5 or claim 6, further comprising combining optics arranged to receive the first wavelength component and the second wavelength component and to combine them so that the first and second radiation components at least partially spatio-temporally overlap.

8. The radiation source of claim 7, further comprising an adjustment module operable to provide control over spatial and/or temporal overlap of the first wavelength component and the second wavelength component.

9. The radiation source of any preceding claim, wherein an inner dimension of the hollow core is between 10 µm and 100 µm.

10. The radiation source of any preceding claim, wherein the hollow core optical fiber comprises a cladding portion surrounding the hollow core, the cladding portion comprising a plurality of anti-resonance elements for guiding radiation through the hollow core.

11. The radiation source of any preceding claim, wherein the pump radiation is pulsed.

12. The radiation source of any preceding claim, wherein the molecular gas comprises hydrogen or deuterium.

13. A metrology arrangement for determining a parameter of interest of a structure on a substrate, the metrology arrangement comprising:
the radiation source of any preceding claim;
an illumination sub-system for illuminating the structure on the substrate using the broadband output radiation; and
a detection sub-system for detecting a portion of radiation scattered and/or reflected by the structure, and for determining the parameter of interest from said portion of radiation.

14. A method for broadband radiation generation, the method comprising:
directing pump radiation through a hollow core optical fiber having a hollow core filled with a working medium comprising a molecular gas;
wherein the pump radiation comprises a plurality of wavelength components, each having a bandwidth of 50 nm or less, the plurality of wavelength components at least partially spatially and/or temporally overlapping at an entrance of the hollow core optical fiber;
wherein a power of each of the plurality of wavelength components is at least 10% of the total power of the pump radiation; and
wherein a characteristic of the working medium and/or a configuration of the hollow core optical fiber are such that phase matching conditions for four wave mixing processes involving any two of the plurality of wavelength components are not met.

15. The method of claim 14, wherein the plurality of wavelength components comprises a first wavelength component and a second wavelength component, the first component having a smaller wavelength than the second wavelength component; and wherein a zero dispersion wavelength of the hollow core optical fiber is greater than the wavelength of the first wavelength component.
